# EUROPÄISCHE PATENTSCHRIFT

(11) **EP 2 881 626 B1**
(45) Veröffentlichungstag und Bekanntmachung des Hinweises auf die Patenterteilung: **03.03.2021**
(21) Anmeldenummer: 14191397.0
(22) Anmeldetag: 03.11.2014
(51) Int. Cl.: F16H 63/30

(54) **Schaltanordnung für ein Kraftfahrzeuggetriebe und Verfahren zu deren Betätigung**
Shifting assembly for a motor vehicle transmission and method for actuating the same
Système de commande pour une boîte de vitesses de véhicule automobile et son procédé d'actionnement

(30) Priorität: 03.12.2013 DE 102013018103
(43) Veröffentlichungstag der Anmeldung: 10.06.2015
(73) Patentinhaber: Magna PT B.V. & Co. KG, 74199 Untergruppenbach (DE)
(72) Erfinder: Bünder, Carsten, 70563 Stuttgart (DE)
(74) Vertreter: Rausch, Gabriele

(56) Entgegenhaltungen:
- WO-A1-02/066870
- WO-A1-2004/038261
- WO-A1-2006/097073
- DE-A1-102008 030 238
- US-A1- 2006 201 269

## Beschreibung

Die vorliegende Erfindung betrifft eine Schaltanordnung für ein Kraftfahrzeuggetriebe, das wenigstens zwei Gangstufen aufweist, die mittels unterschiedlicher Stangen einlegbar und auslegbar sind.

Ferner betrifft die vorliegende Erfindung ein Kraftfahrzeuggetriebe mit solch einer Schaltanordnung sowie ein Verfahren zum Betätigen einer solchen Schaltanordnung.

Schaltanordnungen dieser Art sind im Stand der Technik bekannt. In der Regel weist ein Kraftfahrzeuggetriebe für jeweils zwei Gangstufen ein Schaltkupplungspaket aus zwei Schaltkupplungen auf, die mittels einer gemeinsamen Schaltmuffe betätigbar sind. Die Schaltkupplungen können dabei Klauenkupplungen sein, sind jedoch vorzugsweise Synchron-Schaltkupplungen. Das Kraftfahrzeuggetriebe ist vorzugsweise ein Stirnradgetriebe in Vorgelegebauweise.

Jede Schaltmuffe ist bei einer üblichen Schaltanordnung mit einer Schaltstange gekoppelt. Die Schaltstangen weisen jeweils Nuten auf, in die ein Schaltfinger eingreifen kann, der an einer Schaltwelle festgelegt ist. Die Schaltwelle kann dabei parallel zu den Schaltstangen angeordnet sein. In diesem Fall führt ein Verdrehen der Schaltwelle zu einem Wählvorgang, bei dem eine bestimmte Schaltstange angewählt wird, und ein Längsversetzen der Schaltwelle führt zu einem Schaltvorgang, bei dem eine der Schaltstange zugeordnete Schaltkupplung betätigt wird. Es ist auch bekannt, die Schaltwelle quer zu derartigen Schaltstangen anzuordnen. In diesem Fall erfolgt das Wählen durch einen Längsversatz der Schaltwelle, und der Schaltvorgang wird durch einen Verdrehvorgang der Schaltwelle eingeleitet.

Es ist auch bekannt, Schaltwellen mit mehreren Schaltfinger auszustatten, die jeweils einer Schaltgabel zugeordnet sind. Die Schaltgabeln greifen jeweils in zugeordnete Schaltmuffen von Schaltkupplungspaketen. Hierbei wird die Schaltstange zum Schalten in der Regel axial versetzt und zum Anwählen einer Schaltgabel verdreht. Dabei ist es auch bekannt, an einer solchen Schaltwelle für jede Schaltkupplung eine Mehrzahl von axial hintereinander versetzt angeordneten Schaltfinger vorzusehen. Hierdurch wird es ermöglicht, eine Gangstufe eingelegt zu lassen und eine weitere Gangstufe einzulegen. Dies ist insbesondere auf dem Gebiet der Doppelkupplungsgetriebe relevant. Doppelkupplungsgetriebe weisen zwei Teilgetriebe auf, von denen jeweils eines aktiv zur Leistungsübertragung verwendet wird und das andere jeweils inaktiv ist. In dem inaktiven Teilgetriebe wird dann in der Regel eine "Anschluss"-Gangstufe vorgewählt, so dass ein Gangwechsel von der Quell-Gangstufe in die Anschlussgangstufe durch überschneidende Betätigung von zwei Reibkupplungen erfolgen kann.

Für automatisierte Schaltgetriebe und Doppelkupplungsgetriebe ist es auch bekannt, für jede der Schaltstangen einen eigenen Aktuator vorzusehen, so dass die Schaltkupplungspakete unabhängig voneinander betätigbar sind.

Ferner ist es auf dem Gebiet der Fahrzeuggetriebe bekannt, Schaltwalzen zum Betätigen von Schaltkupplungen zu verwenden. Die Schaltwalzen weisen dabei eine Schaltwalzenkontur auf, in die ein mit einer Schaltgabel verbundener Mitnehmer greift, derart, dass Drehbewegungen der Schaltwalze in Axialbewegungen der Schaltgabel umgesetzt werden können. Auf dem Gebiet der Doppelkupplungsgetriebe ist es bekannt, jedem Teilgetriebe eine eigene Schaltwalze zuzuordnen. Es ist jedoch auch möglich, die zwei Teilgetriebe mit nur einer einzigen Schaltwalze zu bedienen. Im letzteren Fall ergeben sich aufgrund des sequentiellen Schaltablaufes Nachteile in der Schaltzeit. Ferner ergibt sich ein sehr großer Durchmesser der einzelnen Schaltwalze, so dass die Schaltanordnung einen relativ großen Raum innerhalb des Getriebegehäuses einnimmt.

Aus der WO 02 066 870 A1 ist ein Getriebe bekannt, das mit einer Schaltwalze und Stangen betätigbar ist. Dabei erfolgt der Schaltprozess und die Betätigung der Einzelstangen immer über die Schaltwalze, die Schaltfinger betätigt.

Aus der WO 2006 097 073 A1 ist das Steuern eines Schaltvorgangs bekannt mit aktiver Verriegelung. Die Schaltaktuatorik erfolgt mit einem mit einer Schaltgabel zusammenwirkenden Schaltfinger und einer Auslegegeometrie mit einem Auslegefinger und einem Auslegenocken.

Die US 2006 201 269 A1 zeigt eine Steuereinrichtung für ein mechanisches Getriebe mit zwei Eingangskupplungen. Das vorgeschlagene Getriebe wird durch Wählschalter betätigt die einen Schaltzylinder enthalten.

Die WO 2004 038 261 A1 zeigt ein Doppelkupplungsgetriebe mit einer Mehrzahl von Schaltstangen, die jeweils über eine Schaltwelle betätigt werden.

Aus der DE 10 2008 030 238 A1 ist ein Schaltgetriebe für ein Doppelkupplungsgetriebe bekannt, wobei eine Auswahl von Gruppen von Gängen erfolgt, die jeweils über ein Teilgetriebe betätigbar sind.

Vor dem obigen Hintergrund ist es eine Aufgabe der Erfindung, eine verbesserte Schaltanordnung sowie ein verbessertes Verfahren zum Betätigen einer solchen Schaltanordnung anzugeben.

Diese Aufgabe wird zum einen gelöst durch eine Schaltanordnung nach Anspruch 1.

In entsprechender Weise wird die obige Aufgabe gelöst durch ein Verfahren zum Betätigen einer solchen Schaltanordnung eines Kraftfahrzeuggetriebes nach Anspruch 13.

Vorteilhafte Ausgestaltungen der Erfindung ergeben sich aus den abhängigen Ansprüchen.

Bei der erfindungsgemäßen Schaltanordnung sind die Schubstangen jeweils mit einer Schaltkupplung oder einem Schaltkupplungspaket koppelbar, wobei ein Schaltkupplungspaket in der Regel zwei Schaltkupplungen beinhaltet, die mittels einer Schaltmuffe oder dergleichen betätigbar sind. Bei Kopplung mit einem Schaltkupplungspaket kann die eine Schaltkupplung des Schaltkupplungspaketes in der Regel mittels einer Schubstange betätigt werden, indem auf diese eine Schubkraft übertragen wird. Die andere Schaltkupplung dieses Schaltkupplungspaketes kann betätigt werden, indem auf die der Schubstange zugeordnete Rückholstange eine Schubkraft ausgeübt wird, wobei die Rückholstange über die Kopplung mit der Schubstange dazu eingerichtet ist, die andere Schaltkupplung des Schaltkupplungspaketes zu betätigen.

Es ist folglich bevorzugt, wenn Schaltvorgänge bei der Schaltanordnung ausschließlich durch Schubbewegungen erfolgen, bei denen der Schaltnocken eine Schubkraft entweder auf eine Schubstange oder eine Rückholstange ausübt.

Bevorzugt ist es ferner, wenn die hierbei eingerichtete Kopplung zwischen dem Schaltglied und der jeweiligen Stange nur durch Anlage des Schaltnockens an der ausgewählten Stange erfolgt. Bei einer Rückwärtsbewegung des Schaltnockens wird die Stange folglich vorzugsweise nicht von dem Schaltnocken mitgenommen.

Bei der erfindungsgemäßen Schaltanordnung ist es vorzugsweise möglich, die wenigstens zwei Gangstufen mittels nur eines Schaltmotors ein- und auszulegen, wobei der Schaltmotor vorzugsweise dazu ausgebildet ist, das Schaltglied zu verdrehen. Insbesondere ist es bevorzugt, wenn das Schaltglied als Mutter ausgebildet ist, die mit einer Spindel einen Spindeltrieb bildet, der bspw. durch eine herkömmliche Schraube und eine Mutter gebildet sein kann, jedoch auch durch einen Kugelgewindetrieb gebildet sein kann.

Der Schaltmotor kann in diesem Fall bspw. ein Elektromotor sein, der sich auf einfache Weise ansteuern lässt.

Die Schalt- und Rückholstangen sind vorzugsweise entlang jeweiliger Schaltachsen an dem Gehäuse beweglich gelagert, die vorzugsweise parallel zu einer Spindelachse ausgerichtet sind. Die Schaltachsen sind vorzugsweise parallel zu Wellen des Kraftfahrzeuggetriebes angeordnet.

Ferner ist es bevorzugt, wenn an dem Gehäuse die Mehrzahl von Stangen parallel zueinander beweglich gelagert ist, die um die Spindelachse bzw. Längsachse herum verteilt, angeordnet sind.

Jeder der Schubstangen ist vorzugsweise einer Axialführung zugeordnet, die mit einer Umfangsnut axial verbunden ist. Innerhalb der Umfangsnut ist vorzugsweise der Schaltnocken verdrehbar.

Hierdurch ist es möglich, durch Verdrehen des Schaltnockens innerhalb der Umfangsnut einen Wählvorgang durchzuführen, bei dem der Schaltnocken (der auch als Schaltfinger bezeichnet werden kann) mit einer Ziel-Stange ausgerichtet wird. Bei diesem Wählvorgang wird die Mutter vorzugsweise nicht in Umfangsrichtung festgehalten, so dass sie sich mit der Spindel mitdreht. Um die angewählte Stange dann axial zu betätigen, wird die Mutter bzw. das Schaltglied in Umfangsrichtung festgehalten, so dass die Mutter bei geeigneter Drehrichtung der Spindel in die Axialführung einfährt und dort in Umfangsrichtung gehalten wird, um auf diese Weise die Schubstange in der ersten Axialrichtung zu bewegen.

Vorzugsweise werden die Wähl- und die Schaltfunktion einer Schaltanordnung für ein Kraftfahrzeuggetriebe folglich so realisiert, dass bei einem Spindeltrieb die Mutter entweder an einer Verdrehung gegenüber der Spindel blockiert wird, um so eine axiale Bewegung der Mutter auf die Spindel einzuleiten. Erfolgt hingegen keine Blockierung der Mutter gegenüber einer Verdrehung der Spindel, oder erfolgt sogar eine Blockierung (Fixierung) auf der Spindel, so dreht sich die Mutter mit der Spindel. Diese zwei Bewegungsarten können folglich für die Wähl- und die Schaltfunktion verwendet werden.

Eine solche Schaltanordnung kann in axialer als auch in radialer Richtung kompakt bauen, insbesondere deutlich kompakter als eine einzelne Schaltwalze, die eine Mehrzahl von Gangstufen zu betätigen hat.

Ferner können geringe Schaltzeiten realisiert werden. Zudem ergibt sich im Gegensatz zu einer Schaltanordnung mit einer einzelnen Schaltwalze eine weitgehend freie Schaltreihenfolge.

Ferner ist es in manchen Ausführungsformen möglich, mittels der Schaltanordnung zwei Gangstufen gleichzeitig einzulegen, so dass sich die Schaltanordnung insbesondere auch zur Verwendung in Kombination mit Doppelkupplungsgetrieben eignet.

Die Position der Mutter wird vorzugsweise mittels einer geeigneten Sensoranordnung gemessen. Die Sensoranordnung kann bspw. einen Inkrementalsensor beinhalten und weist vorzugsweise zusätzliche einen Nullpunktsensor auf, so dass sich der Spindeltrieb auf einfache Art und Weise kalibrieren lässt, insbesondere nach einem Reset eines Steuergerätes. Ferner können Sensoren vorgesehen sein, um die Axialposition von wenigstens einer der Stangen zu erfassen.

Durch den an dem Schaltglied angeordneten Mitnehmer ist es erfindungsgemäß möglich, eine nicht ausgewählte Stange bei oder vor einem Schaltvorgang in die Neutralposition zu versetzen.

Hierdurch ist es möglich, Schaltvorgänge deutlich schneller durchzuführen.

Insbesondere kann innerhalb eines Getriebeabschnittes (insbesondere innerhalb eines automatisierten Schaltgetriebes oder innerhalb eines Teilgetriebes eines Doppelkupplungsgetriebes) durch eine einzige Axialbewegung des Schaltgliedes sowohl der eigentliche Schaltvorgang (Einlegen einer Gangstufe) als auch ein Auslegevorgang einer ggf. vorher eingelegten Gangstufe durchgeführt werden.

Bei Doppelkupplungsgetrieben können folglich Mehrfachschaltungen im gleichen Teilgetriebe deutlich schneller durchgeführt werden, indem der Aus- und der Einlegevorgang funktional verbunden werden.

Die Anzahl der Gangstufen kann insbesondere größer sein als vier und kann bei einem Doppelkupplungsgetriebe bspw. acht Gangstufen (sieben Vorwärtsgangstufen und eine Rückwärtsgangstufe) beinhalten, oder auch mehr als sieben Vorwärtsgangstufen. Gegebenenfalls ist es auch möglich, eine eigene Schubstange zum Betätigen einer Parksperrenanordnung vorzusehen. Diese Schubstange hat dann vorzugsweise nur Kontakt zu dem Schaltnocken (Einlegenocken), nicht aber zu dem oder den Mitnehmern.

Bei der erfindungsgemäßen Schaltanordnung ist es von besonderem Vorzug, dass an dem Schaltglied zwei Mitnehmer so angeordnet sind, dass die Mitnehmer, vor oder bei einem Schaltvorgang an einer ausgewählten Stange, eine Schubkraft auf eine nicht ausgewählte Schubstange und deren zugeordnete Rückholstange übertragen können, um diese in die Neutralposition zu versetzen.

Durch diese Maßnahme kann gewährleistet werden, dass innerhalb eines Getriebeabschnittes (bspw. eines automatisierten Schaltgetriebes oder eines Teilgetriebes eines Doppelkupplungsgetriebes) sämtliche nicht ausgewählte Schubstangen und deren zugeordnete Rückholstangen in die Neutralposition versetzt werden, insbesondere, bevor die der ausgewählten Stange zugeordnete Schaltkupplung geschlossen wird.

Es versteht sich, dass an dem Schaltglied ggf. auch mehr als zwei Mitnehmer angeordnet sind, insbesondere, wenn in dem jeweiligen Getriebeabschnitt mehr als zwei Schubstangen und zugeordnete Rückholstangen vorgesehen sind. Insbesondere können auch mehrere Paare von Mitnehmern an dem Schaltglied vorgesehen sein, um jeweils Schubstangen und zugeordnete Rückholstangen bei einem Schaltvorgang in die Neutralposition zu versetzen.

Von besonderem Vorzug ist es , dass der oder die Mitnehmer jeweils mit einer Federeinrichtung verbunden sind, wobei die Federeinrichtung so angeordnet und ausgebildet ist, dass die Schubkraft von dem Mitnehmer über die Federeinrichtung auf die nicht ausgewählte Stange und/oder deren zugeordnete Stange übertragen wird.

Durch diese Maßnahme ist es insbesondere möglich, die nicht ausgewählte Stange und deren zugeordnete Stange über die Kraft der Federeinrichtung(en) in die Neutralposition zu bewegen, bevor der Schaltnocken die ausgewählte Stange in Axialrichtung so bewegt, dass eine Ziel-Gangstufe eingelegt wird. Dies erhöht folglich die Funktionssicherheit.

Dabei können die Federeinrichtungen bei dem Überführen der nicht ausgewählten Stange(n) ggf. bereits etwas einfedern, was jedoch ohne Funktionsnachteil ist.

In jedem Fall sind die Federeinrichtungen vorzugsweise so dimensioniert, dass ein Auslegen wenigstens einer "alten" Quell-Gangstufe sicher möglich ist.

Von besonderem Vorzug ist es dabei, wenn der Federweg der Federeinrichtung größer gleich dem Weg einer Stange von der Neutralposition in die Schaltposition ist.

Hierdurch ist es möglich, dass die Federeinrichtung ab dem Zeitpunkt, zu dem der Schaltnocken die ausgewählte Stange berührt, komprimiert wird, bis der Schaltnocken die ausgewählte Schubstange in die Schaltposition bewegt hat.

Gemäß der Erfindung sind die Federeinrichtung und der Schaltnocken, in axialer Richtung gesehen, so zueinander angeordnet, dass die Übertragung einer Schubkraft von dem Mitnehmer oder den Mitnehmern über die Federeinrichtung auf die nicht ausgewählte Stange oder Stangen erfolgt, bevor der Schaltnocken eine Schubkraft auf die ausgewählte Stange ausübt, so dass gewährleistet ist, dass eine Schaltkupplung einer Quell-Gangstufe geöffnet wird, bevor eine Schaltkupplung einer Ziel-Gangstufe geschlossen wird, die der ausgewählten Stange zugeordnet ist.

Dabei ist es insbesondere bevorzugt, wenn die Federeinrichtung in axialer Richtung hin zu den Stangen in dem nicht komprimierten Zustand gegenüber dem Schaltnocken axial vorsteht.

Ferner ist es bevorzugt, wenn zwischen einer Schubstange und ihrer zugeordneten Rückholstange, in einer Richtung quer zur Axialrichtung gesehen, wenigstens eine andere Schubstange oder Rückholstange angeordnet ist.

Hierdurch kann mittels des Schaltnockens bspw. auf die andere Schubstange oder Rückholstange eine Axialkraft ausgeübt werden und die Mitnehmer können Schubkräfte auf die Schubstange und ihre zugeordnete Rückholstange übertragen.

Ferner ist es insgesamt vorteilhaft, wenn das Schaltglied zum Wählen um eine Längsachse verdrehbar ist, wobei die Schubstangen und die Rückholstangen in Umfangsrichtung um die Längsachse herum verteilt angeordnet sind.

Generell ist es zwar auch denkbar, die Schubstangen und Rückholstangen in einer Ebene anzuordnen. Die bevorzugte Ausführungsform ermöglicht jedoch insbesondere die Verwendung eines Spindeltriebs zum Antrieb des Schaltgliedes.

Dabei ist es von besonderem Vorzug, wenn die Schubstange und ihre zugeordnete Rückholstange diametral in Bezug auf die Längsachse angeordnet sind.

Dies ermöglicht es, die Kopplung zwischen der Schubstange und ihrer zugeordneten Rückholstange konstruktiv günstig zu realisieren.

Wie oben erwähnt, kann das Kraftfahrzeuggetriebe ein automatisiertes Schaltgetriebe sein, das nur eine Anfahrkopplung aufweist, also kein Doppelkupplungsgetriebe.

In diesem Fall ist es vorteilhaft, wenn das Schaltglied für sämtliche nicht ausgewählten Schubstangen und deren zugeordnete Rückholstangen einen Mitnehmer aufweist, so dass bei einer eingelegten Gangstufe alle anderen Gangstufen des Kraftfahrzeuggetriebes über die Mitnehmer verriegelt sind.

Bei dieser Ausführungsform kann auf eine separate Gangverriegelung ggf. verzichtet werden, da die ansonsten notwendig ist, um die nicht ausgewählten Schubstangen bzw. deren Rückholstangen in einer Neutralposition zu halten.

Gemäß einer weiteren Variante ist das Kraftfahrzeuggetriebe ein Doppelkupplungsgetriebe, das ein erstes Teilgetriebe und eine zweites Teilgetriebe aufweist, wobei die Schaltanordnung Schubstangen und Rückholstangen für beide Teilgetriebe aufweist, die mittels des einen Schaltgliedes betätigbar sind.

Das erste Teilgetriebe weist dabei vorzugsweise ungerade oder gerade Gangstufen auf, und das andere Teilgetriebe weist vorzugsweise gerade oder ungerade Gangstufen auf.

Die generelle Funktionsweise von Doppelkupplungsgetrieben ist allgemein bekannt und wird daher vorliegend nicht näher im Detail beschrieben.

Im Kern kann jedoch in beiden Teilgetrieben jeweils eine Gangstufe gleichzeitig eingelegt sein, wobei nur über eine der Gangstufen Leistung übertragen wird, wohingegen die andere Gangstufe vorgewählt ist, so dass anschließend Gangwechsel im Wesentlichen zugkraftunterbrechungsfrei durchgeführt werden können.

Hierbei ist es vorteilhaft, wenn das Schaltglied zum Wählen um eine Längsachse verdrehbar ist, wobei die Schubstangen und die Rückholstangen in Umfangsrichtung um die Längsachse herum verteilt angeordnet sind, wobei, über den Umfang gesehen, eine Schubstange oder Rückholstange eines Teilgetriebes benachbart ist zu einer Schubstange oder Rückholstange des anderen Teilgetriebes.

Hierdurch wird es möglich, den oder die Mitnehmer dazu zu verwenden, beim Einlegen einer Ziel-Gangstufe in einem Teilgetriebe die anderen Gangstufen des gleichen Teilgetriebes auszulegen. Ferner ist es hierdurch möglich, dass bei einem solchen kombinierten Ein- und Auslegevorgang in einem Teilgetriebe die Schaltposition der Gangstufen des anderen Teilgetriebes nicht beeinflusst wird. In diesem Fall kann es bevorzugt sein, für die Teilgetriebe separate Gangverriegelungen vorzusehen.

Um zu erreichen, dass bei dem oben erwähnten Spindeltrieb das Schaltglied (die Mutter) dazu gezwungen wird, sich zum Wählen zu verdrehen, ist vorzugsweise ein Anschlag vorgesehen, der die Mutter axial hält, so dass diese zwangsweise verdreht wird.

Von besonderem Vorteil ist es ferner, wenn dem Anschlag eine Freilaufeinrichtung zugeordnet ist, die eine Verdrehung der Mutter in einer ersten Drehrichtung zulässt und eine Verdrehung in der anderen Drehrichtung in wenigstens einer vorbestimmten Drehposition sperrt.

Die Schaltbetätigung kann bei der erfindungsgemäßen Schaltanordnung insbesondere mittels eines einzelnen Elektromotors realisiert werden.

Insgesamt kann mit der erfindungsgemäßen Schaltanordnung bzw. dem erfindungsgemäßen Verfahren das Ziel erreicht werden, eine Schaltbetätigung insbesondere elektromotorisch mittels eines einzelnen Elektromotors zu realisieren. Die Schaltanordnung eignet sich insbesondere für Doppelkupplungsgetriebe. Ferner können geringe Schaltzeiten realisiert werden. Auch sind in weitem Umfang freie Schaltreihenfolgen realisierbar. Schließlich kann die Schaltanordnung äußerst kompakt realisiert werden, und zwar sowohl in radialer als auch in axialer Richtung, so dass sich nur geringe Packageanforderungen innerhalb des Getriebegehäuses ergeben. Die Schaltanordnung kann zudem kostengünstig hergestellt werden.

Generell ist es möglich, durch geeignete Verbindungen von Schubstangen eines Teilgetriebes das Einlegen von mehr als einer Gangstufe in einem Teilgetriebe zu verhindern. Ferner kann eine derartige Gangverriegelung bei einem Getriebe, das nicht als Doppelkupplungsgetriebe ausgebildet ist, auch eine Gangverriegelung hinsichtlich sämtlicher Gangstufen des Getriebes erzielt werden, so dass nur eine einzelne Gangstufe einlegbar ist.

Ferner ist es generell möglich, Schubstangen im gleichen Teilgetriebe beim Doppelkupplungsgetriebe während des Einlegens einer Gangstufe im gleichen Teilgetriebe in eine Neutralstellung zu bringen. Hierdurch ist das Auslegen eines Ganges im gleichen Teilgetriebe, aber auf einer anderen Schubstange, nicht erforderlich, sondern erfolgt durch Betätigen der aktuell betätigten Schubstange.

Während in den obigen Ausführungsformen generell davon ausgegangen wird, dass die Mutter die Schubstange in axialer Richtung "drückt", versteht sich, dass bei geeigneter mechanischer Ausbildung auch ein "Ziehen" einer Schubstange möglich ist, um eine Bewegung der Schubstange in der ersten Axialrichtung zu realisieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele des Standes der Technik (Figuren 1 bis 9) und der Erfindung (Figuren 10 bis 19) sind in der Zeichnung dargestellt und werden in der nachfolgenden Beschreibung näher erläutert. Es zeigen:
- Fig. 1: eine schematische Darstellung eines Kraftfahrzeug-Antriebsstranges mit einer schematisch dargestellten Ausführungsform einer Schaltanordnung;
- Fig. 2: eine schematische Darstellung entlang einer Schnittlinie II-II der Fig. 1;
- Fig. 3: eine der Fig. 1 vergleichbare Ansicht einer weiteren Ausführungsform einer Schaltanordnung;
- Fig. 4: eine schematische Schnittansicht entlang einer Linie IV-IV der Fig. 3;
- Fig. 5: eine schematische Darstellung einer Freilaufeinrichtung der Schaltanordnung der Fig. 3 und 4 in vergrößerter Form;
- Fig. 6: eine Abwicklung einer Schaltanordnung der in den Fig. 3 und 4 gezeigten Art, wobei sämtliche Schubstangen in einer Neutralposition sind;
- Fig. 7: eine der Fig. 6 entsprechende Darstellung, wobei die Gangstufen 2 und 3 eingelegt sind;
- Fig. 8: eine schematische Draufsicht auf eine Freilaufkontur einer weiteren Ausführungsform einer Freilaufeinrichtung einer Schaltanordnung;
- Fig. 9: • eine schematische Darstellung eines Antriebsstranges in Form eines Zweiganggetriebes mit einer weiteren Ausführungsform einer Schaltanordnung;
- Fig. 10: eine schematische Darstellung einer ersten Ausführungsform einer erfindungsgemäßen Schaltanordnung;
- Fig. 11: die Schaltanordnung der Fig. 10 nach dem Einlegen der Gangstufe 4;
- Fig. 12: die Schaltanordnung der Fig. 10 nach einer Rückbewegung des Schaltgliedes;
- Fig. 13: die Schaltanordnung der Fig. 10 nach einem Wählvorgang zum Anwählen der Gangstufe 1;
- Fig. 14: die Schaltanordnung der Fig. 10 nach einer Bewegung der Schubstange der Gangstufe 4 und ihrer zugeordneten Rückholstange in die Neutralposition;
- Fig. 15: die Schaltanordnung der Fig. 10 nach dem Einlegen der Gangstufe 1;
- Fig. 16: eine schematische Schnittansicht durch einen Mitnehmer mit einer zugeordneten Federeinrichtung im nicht komprimierten Zustand;
- Fig. 17: eine der Fig. 16 vergleichbare Darstellung bei komprimierter Federeinrichtung;
- Fig. 18: eine schematische Darstellung einer weiteren erfindungsgemäßen Ausführungsform einer Schaltanordnung für ein Doppelkupplungsgetriebe, und zwar in einer abgewickelten Darstellung; und
- Fig. 19: eine schematische axiale Draufsicht auf die Schaltanordnung der Fig. 18.

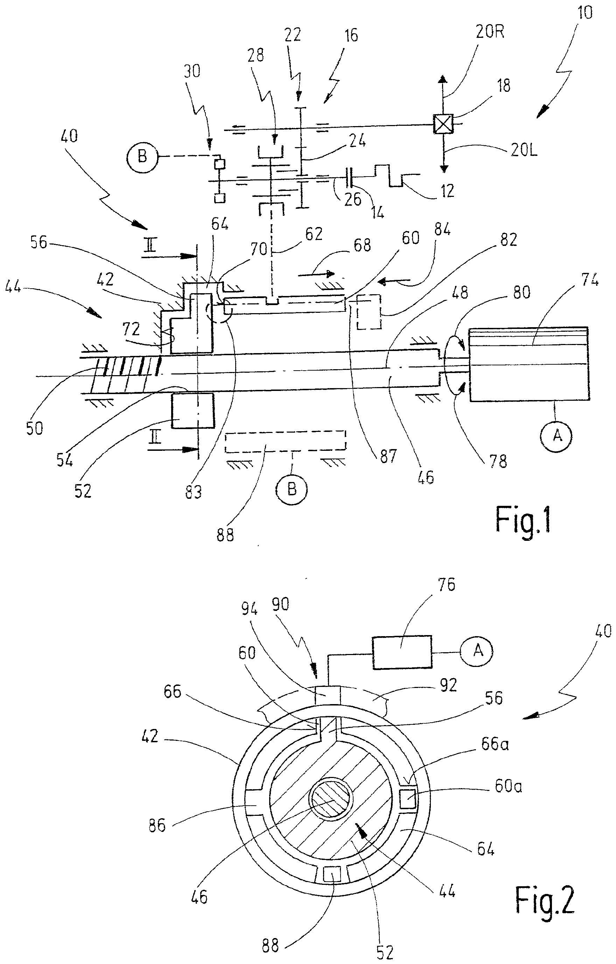

In den Fig. 1 und 2 ist ein Antriebsstrang für ein Kraftfahrzeug schematisch dargestellt und generell mit 10 bezeichnet. Der Antriebsstrang 10 beinhaltet einen Antriebsmotor 12 wie einen Verbrennungsmotor, dessen Antriebswelle mit einer Kupplungsanordnung 14 verbunden ist. Ein Ausgang der Kupplungsanordnung 14 ist mit einer Getriebeanordnung 16 verbunden. Ein Ausgang der Getriebeanordnung 16 ist mit einem Differential 18 verbunden, mittels dessen Antriebsleistung auf zwei angetriebene Räder 20L, 20R verteilt wird. Die Getriebeanordnung 16 ist vorliegend lediglich schematisch mit einer Eingangswelle und einer Ausgangswelle angedeutet, die durch einen Radsatz 22 miteinander verbunden sind. Bei der Getriebeanordnung 16 handelt es sich insbesondere um ein Stirnradgetriebe, insbesondere in Vorgelegebauweise. Die Getriebeanordnung 16 kann insbesondere ein automatisiertes Schaltgetriebe sein, vorzugsweise ein Doppelkupplungsgetriebe.

Der Radsatz 22 weist ein Losrad 24 auf, das an einer Welle 26 der Getriebeanordnung 16 drehbar gelagert ist. An der Welle 26 ist eine Schaltkupplung angeordnet, die herkömmlicher Bauart sein kann, beispielsweise als Klauenkupplung ausgebildet sein kann, insbesondere jedoch als Synchron-Schaltkupplung.

Die Schaltkupplung 28 weist eine nicht näher bezeichnete Schaltmuffe auf, die in axialer Richtung an der Welle 26 verschiebbar ist, um das Losrad 24 entweder drehfest mit der Welle 26 zu verbinden und auf diese Weise eine Gangstufe einzulegen, oder von der Welle 26 zu entkoppeln, um auf diese Weise die zugeordnete Gangstufe auszulegen. Getriebeanordnungen 16 dieser Art weisen in der Regel wenigstens eine Rückwärtsgangstufe und wenigstens fünf Vorwärtsgangstufen auf, die jeweils einem Radsatz zugeordnet sind und mittels einer entsprechenden Anzahl von Schaltkupplungen betätigbar sind.

In Fig. 1 ist ferner gezeigt, dass der Antriebsstrang 10 eine Parksperrenanordnung 30 aufweisen kann, die beispielsweise ein Parksperrenrad beinhaltet, das drehfest mit einer der Wellen (hier Welle 26) verbunden ist. Vorzugsweise ist ein solches Parksperrenrad an einer fest mit dem Differential 18 drehgekoppelten Welle angeordnet. Die Parksperrenanordnung 30 kann beispielsweise eine nicht näher dargestellte Parksperrenklinke aufweisen, die zwischen einer Freigabeposition und einer Parksperrenposition verschwenkbar ist, wobei in der Parksperrenposition ein Zahn der Parksperrenklinke in eine Vertiefung des Parksperrenrades eingreift. Zum Betätigen der Parksperrenklinke kann ein linear versetzbares Betätigungsglied vorgesehen sein.

Zum automatisierten Betätigen der Schaltkupplung 28 ist eine Schaltanordnung 40 vorgesehen, die beispielsweise in ein Gehäuse 42 der Getriebeanordnung 16 integriert sein kann. Die Schaltanordnung 40 beinhaltet einen Spindeltrieb 44, der eine Spindel 46 aufweist, die entlang einer Spindelachse 48 ausgerichtet ist und an ihrem Außenumfang zumindest abschnittsweise ein Spindelgewinde 50 aufweist. Die Spindelachse 48 ist vorzugsweise parallel zu der Welle 26 der Getriebeanordnung 16 ausgerichtet. Der Spindeltrieb 44 beinhaltet ferner eine Mutter 52 mit einem Muttergewinde 54, das mit dem Spindelgewinde 50 in Eingriff steht. Der Spindeltrieb 44 kann auch als Kugelumlaufspindeltrieb ausgebildet sein, der generell zu einer Verringerung der Reibung und damit zu einer Verringerung des erforderlichen Motormomentes eines Motors zum Antrieb der Spindel beitragen kann.

An einem Außenumfang der Mutter 52 ist ein radial vorstehender Schaltnocken 56 ausgebildet, der sich vorzugsweise über einen Winkelbereich von < 20° erstreckt. Die Spindel 46 ist an dem Gehäuse 42 drehbar gelagert.

Die Schaltanordnung 40 weist ferner eine Schubstange 60 auf, die an dem Gehäuse 42 parallel zu der Spindelachse 48 versetzbar gelagert ist. Die Schubstange 60 ist in Umfangsrichtung mit dem Schaltnocken 56 ausgerichtet. Ferner ist die Schubstange 60 über eine geeignete Kopplung 62, beispielsweise in der Form einer Schaltgabel, mit der Schaltkupplung 28 gekoppelt. Axialbewegungen der Schubstange 60 führen folglich zu einem axialen Bewegen der Schaltmuffe der Schaltkupplung 28, so dass mittels der Schubstange 60 wenigstens eine Gangstufe ein- und auslegbar ist.

An dem Gehäuse 42 ist eine Umfangsnut 64 ausgebildet, in die der Schaltnocken 56 der Mutter 52 in einer Basis-Axialposition, die in Fig. 1 dargestellt ist, greift. In der Basis-Axialposition lässt sich die Mutter 52 folglich in Umfangsrichtung verdrehen, wie es beispielsweise in Fig. 2 zu erkennen ist. In den Fig. 1 und 2 ist die Mutter 52 so verdreht, dass der Schaltnocken 56 in Umfangsrichtung mit der Schubstange 60 ausgerichtet ist.

An dem Gehäuse 42 ist ferner eine Axialführung 66 ausgebildet, die als eine Art Schaltnockengasse ausgebildet ist. Der Schaltnocken 56 kann folglich axial in die Axialführung 66 eindringen und wird in der Axialführung 66 in Umfangsrichtung gehalten. Die Axialführung 66 kann auch zur Lagerung der Schubstange 60 dienen, und zwar in Umfangsrichtung. Eine Lagerung der Schubstange 60 in Radialrichtung ist aus Übersichtlichkeitsgründen in den Fig. 1 und 2 nicht im Detail dargestellt. Die Umfangsrichtung ist vorzugsweise senkrecht zu der Axialrichtung ausgerichtet.

Sofern die dem Radsatz 22 zugeordnete Gangstufe eingelegt werden soll, wird zunächst die Spindel 46 so verdreht, dass die in der Basis-Axialposition befindliche Mutter 52 verdreht wird, bis der Schaltnocken 56 mit der Axialführung 66 in Umfangsrichtung ausgerichtet ist, wie es in Fig. 1 und 2 dargestellt ist. Durch Halten der Mutter 52 in Umfangsrichtung wird die Mutter in die Axialführung 66 eingeführt, indem die Spindel 46 mit einer geeigneten Drehrichtung angetrieben wird. Sobald der Schaltnocken 56 in der Axialführung 66 eingreift, wird die Mutter 52 von der Axialführung 66 in Umfangsrichtung gehalten und wird folglich zwangsweise in einer ersten Axialrichtung 68 in Richtung auf die Schubstange 60 zu versetzt, bis der Schaltnocken 56 an der Schubstange 60 anschlägt und diese in der ersten Axialrichtung 68 mitnimmt, um auf diese Weise die Schaltkupplung 28 zu betätigen. Zu diesem Zweck ist an einer axialen Stirnseite der Schubstange 60 eine Anlagefläche 70 ausgebildet, an der der Schaltnocken 56 angreift.

Das Gehäuse 42 weist ferner einen Axialanschlag 72 für die Mutter 52 auf, wobei der Axialanschlag 72 die Basis-Axialposition definiert. Wenn die Mutter 52 folglich nach dem Versetzen der Schubstange 60 in die entgegengesetzte Axialrichtung bewegt wird, und zwar durch Antreiben der Spindel in der entgegengesetzten Richtung, tritt der Schaltnocken 56 schließlich aus der Axialführung 66 aus, und die Mutter kommt anschließend in Anlage an die Anlagefläche 70, so dass die Mutter in der Basis-Axialposition durch Verdrehen der Spindel 46 verdreht werden kann, wobei der Schaltnocken 56 die Umfangsnut 64 durchläuft.

In Fig. 2 ist dargestellt, dass an dem Gehäuse 42 in Umfangsrichtung verteilt eine Mehrzahl von Schubstangen 60 angeordnet sein kann (hier Schubstangen 60 und 60a). Der Schubstange 60a ist eine entsprechende Axialführung 66a zugeordnet. Nach einem Verdrehen der Mutter 52 so, dass der Schaltnocken 56 mit der Schubstange 60a ausgerichtet ist, kann auch diese in axialer Richtung versetzt werden, um eine Gangstufe einzulegen, die der weiteren Schubstange 60a zugeordnet ist.

Typischerweise ist eine Schubstange 60 jeweils einer Schaltmuffe zugeordnet, die eine oder zwei Schaltkupplungen eines Schaltkupplungspaketes betätigen kann, wie es im Stand der Technik bekannt ist. Für jeweils zwei Gangstufen ist folglich vorzugsweise jeweils eine eigene Schubstange 60, 60a, ... vorzusehen.

Fig. 1 zeigt einen Schaltmotor 74, der beispielsweise als Elektromotor ausgebildet sein kann und dessen Antriebswelle starr mit der Spindel 46 verbunden ist, wobei der Schaltmotor 74 mittels einer Steuereinrichtung 76 so angesteuert werden kann, dass dieser in einer ersten Drehrichtung 78 oder in einer zweiten Drehrichtung 80 angetrieben werden kann.

Um zu erreichen, dass die Mutter ausgehend aus der BasisAxialposition in der ersten Axialrichtung 68 versetzt wird, bis der Schaltnocken 56 in eine Axialführung 66 eingreift, ist es in der Regel notwendig, die Mutter 52 in Umfangsrichtung zu fixieren. Hierzu kann eine in den Fig. 1 und 2 nicht näher dargestellte Halteeinrichtung vorgesehen werden, die beispielsweise als Rasteinrichtung ausgebildet sein kann. Die Halteeinrichtung ist vorzugsweise dazu ausgelegt, die Mutter 52 wenigstens solange in Umfangsrichtung ausgehend aus der Basis-Axialposition zu halten, bis der Schaltnocken 56 in die Axialführung 66 eingegriffen hat.

Aufgrund der Tatsache, dass ein Axialversatz der Schubstange 60 ausschließlich über eine Schubkraft mittels des Schaltnockens 56 ausgeübt wird, ist vorzugsweise eine Rückholeinrichtung 82 vorgesehen, die in Fig. 1 schematisch angedeutet und dazu ausgelegt ist, die aus einer Neutralposition heraus in der ersten Axialrichtung versetzte Schubstange in einer zweiten Axialrichtung 84 zu bewegen, die der ersten Axialrichtung 68 entgegengesetzt ist.

Mittels der Rückholeinrichtung 82 ist es folglich vorzugsweise auch möglich, die Schubstange 60 aus einer Neutralposition, in der die Schaltkupplung 28 und ggf. eine dem gleichen Schaltkupplungspaket zugeordnete Schaltkupplung geöffnet ist, auch in die der ersten Axialrichtung 68 entgegengesetzte Axialrichtung 84 zu bewegen, um beispielsweise eine derartige zweite Schaltkupplung des gleichen Schaltkupplungspaketes zu betätigen.

Über die oben beschriebene Funktionsweise des Spindeltriebes 44 wird die Schubstange 60 (oder weitere Schubstangen 60a, etc.) folglich generell in der ersten Axialrichtung 68 bewegt. Mittels der Rückholeinrichtung 82 kann die Schubstange (oder die Schubstangen) jeweils in der entgegengesetzten zweiten Axialrichtung 84 bewegt werden. Die Rückholeinrichtung 82 kann folglich ausgehend von der oben beschriebenen Neutralposition auch dazu dienen, eine weitere Schaltkupplung des gleichen Schaltkupplungspaketes zu betätigen. Um aus dieser Position der Schubstange 60 wieder die Neutralposition einzurichten, wird wiederum der Spindeltrieb 44 auf die oben beschriebene Art und Weise betätigt, um die Schubstange 60 aus dieser zweiten Schaltposition wieder in die Neutralposition zurückzuführen (in der ersten Axialrichtung).

Die Rückholeinrichtung 82 kann beispielsweise durch eine lösbare Kupplung 83 zwischen der Mutter 52 und der Schubstange 60 gebildet sein, wie es in Fig. 1 schematisch angedeutet ist.

Ferner kann eine Rückholeinrichtung 82 realisiert werden, indem an dem Gehäuse 42 eine weitere Axialführung 86 vorgesehen wird, der jedoch keine Schubstange zugeordnet ist, die folglich als axiale "Leergasse" ausgebildet ist. Durch Verdrehen der Mutter 52 so, dass der Schaltnocken 56 mit dieser weiteren Axialführung 86 ausgerichtet wird, und durch Verdrehen der Spindel so, dass der Schaltnocken 86 die weitere Axialführung 86 in axialer Richtung durchfährt, kann die Mutter 52 folglich auf die der Basis-Axialposition entgegengesetzte axiale Seite der Schubstange 60 bewegt werden. Folglich ist an dieser entgegengesetzten Position vorzugsweise eine weitere Umfangsnut 87 für den Schaltnocken 56 vorgesehen, was in Fig. 1 schematisch angedeutet ist. Innerhalb der weiteren Umfangsnut 87 kann der Schaltnocken 56 folglich in Umfangsrichtung verdreht werden, um den Schaltnocken beispielsweise mit der Axialführung 66 auszurichten. Durch geeigneten Antrieb der Spindel kann der Schaltnocken dann von der entgegengesetzten Seite in die Axialführung 66 eingreifen und die Schubstange 60 wiederum im Schubbetrieb in der zweiten Axialrichtung 84 bewegen. Anschließend kann die Mutter wieder in der ersten Axialrichtung 68 zurückbewegt werden, hin zu der weiteren Umfangsnut 87. Anschließend kann die Mutter 52 wieder verdreht werden, bis der Schaltnocken 56 mit der weiteren Axialführung 86 ausgerichtet ist, um anschließend die Mutter in der zweiten Axialrichtung 84 wieder in Richtung hin zu der ersten Basis-Axialposition zu bewegen, die in Fig. 1 und 2 dargestellt ist.

Auf diese Weise kann jede Schubstange 60, 60a ausschließlich im Schubbetrieb sowohl in der ersten als auch in der zweiten Axialrichtung 68, 84 betätigt werden, so dass sämtliche Schubstangen 60, 60a, etc. in beiden Axialrichtungen 68, 84 bewegbar sind, um auf diese Weise eine oder mehrere Gangstufen der Getriebeanordnung 16 einzulegen. Es ist insbesondere möglich, bei Ausbildung der Getriebeanordnung 16 durch ein Doppelkupplungsgetriebe, in beiden Teilgetrieben jeweils eine Gangstufe einzulegen, ohne dass es notwendig ist, zwischenzeitlich andere Gangstufen einzulegen, wie es bei einer sequenziellen Schaltwalze regelmäßig der Fall ist.

Insgesamt können so sehr kurze Schaltzeiten erzielt werden.

Es versteht sich, dass eine Steigung des Spindelgewindes 50 und des Muttergewindes 54 so eingerichtet ist, dass zum einen Axialkräfte auf die Schubstange übertragbar sind, die zum Ein- und Auslegen der Gangstufen notwendig sind. Andererseits sind die Steigungen so eingerichtet, dass die Mutter in axialer Richtung vergleichsweise schnell betätigt werden kann, wozu die Drehzahl des Schaltmotors 74 in geeigneter Weise einstellbar ist.

Es versteht sich, dass die Steuereinrichtung 76 dazu ausgelegt ist, den Schaltmotor sowohl hinsichtlich der Drehposition als auch hinsichtlich der Drehgeschwindigkeit in beliebiger Art und Weise anzusteuern, um die obigen Funktionen realisieren zu können.

Bei Bereitstellen der weiteren Umfangsnut 87 versteht sich, dass an dem Gehäuse 42 vorzugsweise ein entsprechender Axialanschlag vorgesehen ist, der dem Axialanschlag 72 der Basis-Axialposition axial gegenüberliegt. Ferner ist eine Halteeinrichtung zum Halten der Mutter im Bereich der weiteren Umfangsnut ebenfalls vorgesehen, um die Mutter bei geeigneter Drehposition in eine der Axialführungen einfädeln zu können.

In Fig. 1 und 2 ist ferner schematisch dargestellt, dass an dem Gehäuse 42 eine Parksperrenschubstange 88 vorgesehen sein kann. Die Parksperrenschubstange 88 kann in gleicher Weise ausgebildet und betätigbar sein, wie jede der Schubstangen 60. Die Parksperrenschubstange 88 ist dabei, wie es in Fig. 1 schematisch angedeutet ist, mit der Parksperrenanordnung 30 gekoppelt, so dass die Schaltanordnung auch dazu verwendet werden kann, um die Parksperrenanordnung 30 zwischen einer Parksperrenposition und einer Freigabeposition hin- und herzuschalten.

In einer alternativen Varianten weist die Schaltanordnung 40 vorzugsweise nur eine solche Parksperrenschubstange 88 auf und keine Schubstangen, so dass die Schaltanordnung 40 ausschließlich zum Betätigen der Parksperrenanordnung ausgelegt ist.

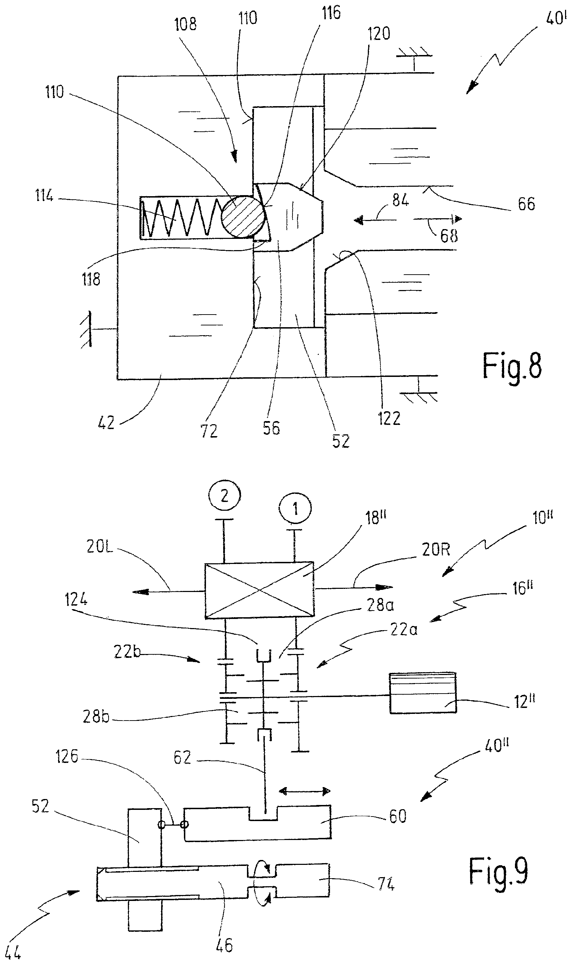

In diesem Fall kann die Schaltanordnung jedoch auch aufgebaut sein, wie es nachstehend noch in Bezug auf Fig. 9 beschrieben werden wird.

Die Schaltanordnung 40 weist vorzugsweise einen Inkrementalsensor 92 auf, mittels dessen die relative Drehlage des Schaltnockens 56 in Bezug auf das Gehäuse 42 erfassbar ist. Der Inkrementalsensor 92 ist dabei mit der Steuereinrichtung 76 verbunden. Ferner ist es vorzugsweise vorgesehen, in einer Umfangsposition einen Nullpositionssensor 94 vorzusehen, mittels dessen eine vorbestimmte Position des Schaltnockens 56 in Umfangsrichtung bestimmbar ist. Auch der Nullpositionssensor 94 ist vorzugsweise mit der Steuereinrichtung 76 verbunden. Anstelle des Inkrementalsensors 92, der an dem Gehäuse 42 angeordnet ist, kann auch eine Logik verwendet werden, die einen Inkrementalsensor des Schaltmotors 74 verwendet, um Rückschlüsse auf die jeweilige aktuelle Drehposition der Mutter 52 zu ermöglichen.

Der Nullpositionssensor 94 dient insbesondere zum Erfassen einer Nullposition, um auf diese Weise einen Inkrementalsensor zu kalibrieren, und zwar insbesondere nach einem Reset.

Bei einem Reset des Steuergerätes 76 kann die Mutter 52 in die BasisAxialposition verbracht werden, ohne dass hierzu Gangstufen ein- oder ausgelegt werden müssen. Anschließend kann die Mutter 52 verdreht werden, bis der Nullpositionssensor 94 die vorbestimmte Drehposition der Mutter 52 erfasst, um auf diese Weise einen Inkrementalsensor zu kalibrieren.

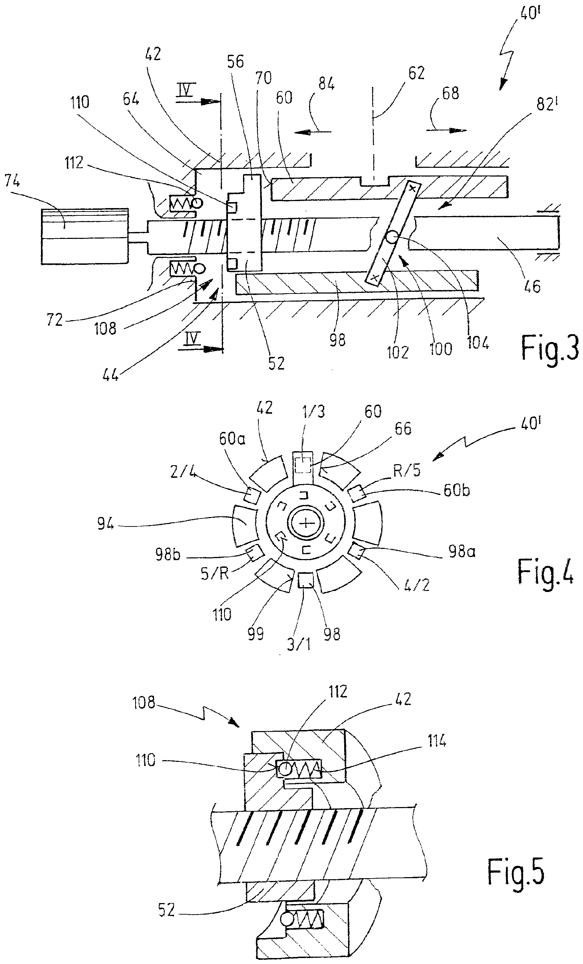

In den Fig. 3 bis 8 ist eine Ausführungsform einer Schaltanordnung gezeigt, die hinsichtlich Aufbau und Funktionsweise generell der Schaltanordnung der Fig. 1 und 2 entspricht und die in diesen Figuren mit 40' bezeichnet ist. Gleiche Elemente sind mit gleichen Bezugsziffern gekennzeichnet. Im Folgenden werden im Wesentlichen die Unterschiede erläutert.

Die Schaltanordnung 40' weist eine weitere Art von Rückholeinrichtung 82' auf, die eine Rückholstange 98 beinhaltet. Die Rückholstange 98 ist generell aufgebaut wie eine Schubstange 60 und ist in einer weiteren Axialführung 99 axial verschieblich an dem Gehäuse 42 gelagert. Die Rückholstange 98 ist in direkter Zuordnung zu der Schubstange 60 vorgesehen. Fig. 4 zeigt neben der einen Schubstange 60 zwei weitere Schubstangen 60a, 60b. Jede dieser Schubstangen 60, 60a, 60b ist eine Rückholstange 98, 98a, 98b zugeordnet. Die Rückholstangen 98 sind vorzugsweise diametral zu den zugeordneten Schubstangen 60 angeordnet, also auf radial gegenüberliegenden Seiten der Mutter 52, wie es insbesondere in Fig. 4 zu sehen ist.

In der Ausführungsform der Fig. 3 bis 8 ist die Schubstange 60 den Gangstufen 1, 3 einer Getriebeanordnung 16 zugeordnet, die insbesondere als Doppelkupplungsgetriebe ausgebildet sein kann. Die Schubstange 60a ist den Gangstufen 2, 4 zugeordnet, und die Schubstange 60b ist den Gangstufen R, 5 zugeordnet. Die Schaltanordnung 40' eignet sich folglich für ein Fahrzeuggetriebe mit fünf Vorwärtsgangstufen und einer Rückwärtsgangstufe. Bei einem Getriebe mit sechs oder sieben Gangstufen wäre folglich eine weitere Schubstange in Umfangsrichtung vorzusehen, bei einem Getriebe mit noch mehr Gangstufen entsprechend weitere Schubstangen.

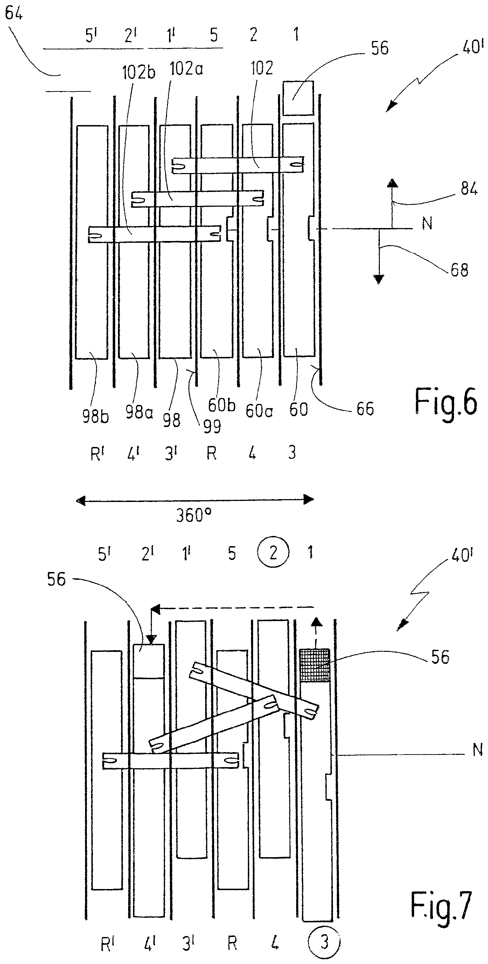

Die Schubstangen 60, 60a, 60b sind mit ihren jeweils zugeordneten Rückholstangen 98, 98a, 98b über jeweilige Rückholkoppeleinrichtung 100 gekoppelt. Die Rückholkoppeleinrichtungen 100, von denen in Fig. 3 nur eine dargestellt ist, sind so ausgebildet, dass die Schubstange 60 und die Rückholstange 98 jeweils in axialer Richtung gegenläufig versetzt werden, derart, dass die Rückholstange 98 in der zweiten Axialrichtung 84 versetzt wird, wenn die Schubstange 60 in der ersten Axialrichtung 68 versetzt wird, und umgekehrt. Die Rückholkoppeleinrichtung 100 ist folglich eine Art Gegentakt-Zwangskopplung. Vorliegend ist die Rückholkoppeleinrichtung 100 mittels eines Hebels 102 realisiert, der sich im Wesentlichen in radialer Richtung erstreckt und an dem Gehäuse 42 verdrehbar ist, und zwar vorzugsweise an einem Anlenkungspunkt 104, der auf der Spindelachse 48 liegt. Die zwei Enden des Hebels 104 sind jeweils gelenkig mit der Schubstange 60 bzw. der zugeordneten Rückholstange 98 verbunden. Weitere Hebel 102, die beispielsweise in den Fig. 6 und 7 bei 102a und 102b gezeigt sind, können in axialer Richtung versetzt gegenüber dem Hebel 102 an dem Gehäuse 42 gelagert sein.

Bei der Rückholeinrichtung 82' der Fig. 3 bis 8 lässt sich die Schubstange 60 dadurch in der zweiten Axialrichtung 84 bewegen und folglich aus einer in erster Schaltrichtung 68 versetzten Position zurückbewegen bzw. rückholen, indem die Mutter 52 wiederum in die Basis-Axialposition versetzt und anschließend verdreht wird, bis der Schaltnocken 56 mit der zugeordneten Rückholstange 98 ausgerichtet ist. Anschließend wird die Rückholstange 98 in der ersten Axialrichtung 68 versetzt, wodurch die Schubstange 60 zwangsweise in der zweiten Axialrichtung 84 versetzt wird.

Es versteht sich, dass hierdurch für die Schubstange 60 sowohl eine Neutralposition eingerichtet werden kann, als auch zwei Schaltpositionen, die einer ersten Gangstufe und einer zweiten Gangstufe zugeordnet sind, die mittels eines Schaltkupplungspaketes betätigbar sind.

Dies ist beispielhaft in den Fig. 6 und 7 gezeigt, wobei Fig. 6 eine Darstellung zeigt, bei der sämtliche Schubstangen 60, 60a, 60b jeweils in ihrer Neutralposition N ausgerichtet sind. In der Darstellung der Fig. 6 befindet sich der Schaltnocken 56 in der Axialführung 66.

Ausgehend von dieser Grundstellung kann der Schaltnocken 56 in der ersten Axialrichtung 68 bewegt werden, indem die Spindel 46 in geeigneter Richtung (abhängig von der Steigung des Spindelgewindes 50) angetrieben wird, wodurch die Schubstange 60 in der ersten Axialrichtung mitgenommen wird, um auf diese Weise die Gangstufe 3 einzulegen, was in Fig. 7 dargestellt ist. Hierdurch wird die zugeordnete Rückholstange 98 in der zweiten Axialrichtung 84 versetzt, was ebenfalls in Fig. 7 dargestellt ist, wodurch der Hebel 102 verschwenkt wird.

Anschließend kann, wie es in Fig. 7 gestrichelt dargestellt ist, die Mutter 52 durch Umkehren der Drehrichtung der Spindel zurückversetzt werden, und zwar in der zweiten Axialrichtung 84. Die Schubstange 60 verbleibt dabei in der Position, bei der die Gangstufe 3 eingelegt ist.

Anschließend kann die Mutter 52 nach Erreichen der Basis-Axialposition (entsprechend der Umfangsnut 64, die in Fig. 6 angedeutet ist) in Umfangsrichtung versetzt werden, bis der Schaltnocken 56 mit der Rückholstange 98a ausgerichtet ist. Anschließend wird die Spindel 46 wieder so angetrieben, dass die Mutter 52 in der ersten Axialrichtung versetzt wird, wodurch der Schaltnocken 56 in die der Rückholstange 98a zugeordnete Axialführung einfährt, die in Fig. 7 nicht näher bezeichnet ist. Hierdurch wird die Rückholstange 98a in der ersten Axialrichtung 68 versetzt, wodurch zwangsläufig mittels des Hebels 102a die Schubstange 60a in der zweiten Axialrichtung 84 versetzt wird, wodurch die Gangstufe 2 eingelegt wird, wie es in Fig. 7 dargestellt ist.

In dem Doppelkupplungsgetriebe kann folglich bei eingelegter Gangstufe 3 im aktiven Teilgetriebe bereits die Gangstufe 2 vorgewählt werden, um sich auf einen Rückschaltvorgang vorzubereiten. Alternativ hätte auch die Schubstange 60a in der ersten Axialrichtung 68 versetzt werden können, um die Gangstufe 4 in dem inaktiven Teilgetriebe vorzuwählen und einen Hochschaltvorgang vorzubereiten.

Ausgehend aus der Darstellung der Fig. 7 kann beispielsweise nach dem Übergeben der Antriebsleistung auf das der Gangstufe 2 zugeordnete Teilgetriebe die Gangstufe 3 wieder ausgelegt werden, indem der Schaltnocken 56 zunächst in die Basis-Axialposition zurückgefahren wird, anschließend verdreht wird und dann die Rückholstange 98 in der ersten Axialrichtung 68 versetzt, bis die Neutralposition erreicht ist. Anschließend kann die Neutralposition N beibehalten werden oder die Rückholstange 98 weiter bewegt werden, um die Gangstufe 1 einzulegen.

Bei der Ausführungsform der Schaltanordnung 40' der Fig. 3 bis 8 ist es folglich möglich, dass die Mutter ausschließlich in der Basis-Grundposition verdreht wird. Das Bereitstellen einer "Leergasse" 86 wie in der Fig. 2 ist hierbei nicht erforderlich. Die Schaltzeiten können hierdurch erheblich verkürzt werden.

Generell ist es möglich, die Schubstangen und/oder die Hebel so miteinander zu koppeln, dass eine Gangverriegelung realisiert wird, die das Einlegen von mehreren Gangstufen in einem Teilgetriebe (im Falle eines Doppelkupplungsgetriebes) verhindert, oder die, (bei einem automatisierten Schaltgetriebe) das Einlegen sämtlicher anderer Gangstufen verhindert, wenn eine Gangstufe eingelegt ist. Konstruktive Details einer derartigen Gangverriegelung sind in den Figuren 3 bis 8 jedoch nicht dargestellt.

Ferner ist es generell denkbar, eine Neutralstellungseinrichtung einzurichten, die beim Einlegen einer Gangstufe in einem Teilgetriebe die anderen Schubstangen, die dem gleichen Teilgetriebe zugeordnet sind, in eine Neutralposition verstellt. Hierdurch ist das Auslegen einer Gangstufe, die dem gleichen Teilgetriebe zugeordnet ist, jedoch einer anderen Schubstange zugeordnet ist, nicht erforderlich, sondern erfolgt durch Betätigen der aktuellen Schubstange.

Wie oben beschrieben, ist es zum Verdrehen der Mutter 52 in der BasisAxialposition erforderlich, dass diese gegen einen Axialanschlag 72 anschlägt, der in axialer Richtung mit der Umfangsnut 64 ausgerichtet, bzw. dieser zugeordnet ist. Der Axialanschlag 72 ist vorzugsweise an dem Gehäuse 42 ausgebildet, könnte jedoch auch an der Spindel 46 ausgebildet sein.

Ferner wurde oben beschrieben, dass die Mutter 52 ausgehend aus der Basis-Axialposition zunächst gehalten werden muss, um diese in eine der Axialführungen 66, 99 einzufädeln.

Bei der Schaltanordnung 40' der Fig. 3 bis 8 erfolgt dies durch eine Freilaufeinrichtung 108, die als einseitige Rasteinrichtung ausgebildet ist.

Die Freilaufeinrichtung 108 ist hierbei zwischen der Mutter 52 und dem Gehäuse 42 eingerichtet und beinhaltet vorliegend eine Freilaufkontur 110 an einer axialen Stirnseite der Mutter 52, die dem Gehäuse zugewandt ist. Ferner beinhaltet die Freilaufeinrichtung 108 eine Mehrzahl von Vorsprüngen 112, die mittels jeweiliger Federn 114 in axialer Richtung in Richtung hin zu der Mutter 52 vorgespannt sind und in einer Grundposition in axialer Richtung gegenüber dem Axialanschlag 72 vorstehen. Dies ist insbesondere in den Fig. 5 und 8 in größerer Genauigkeit dargestellt. Die Vorsprünge 112 sind in Umfangsrichtung dabei so angeordnet, dass jeder Axialführung 66, 99 wenigstens ein Vorsprung 112 zugeordnet ist, vorzugsweise zwei diametral gegenüberliegende Vorsprünge, wie es in Fig. 3 und 5 dargestellt ist.

Die Freilaufkontur 110 weist hierbei einen Schrägkonturabschnitt 116 sowie einen Sperrkonturabschnitt 118 auf. Die Funktionsweise der Freilaufeinrichtung 108 ist insbesondere anhand der Fig. 8 deutlich erkennbar. Wenn die Mutter in axialer Richtung an dem Axialanschlag 72 anschlägt, wird die Mutter zwangsweise in Umfangsrichtung versetzt, wenn die Spindel weiter verdreht wird. Die Freilaufkontur 110 ist so ausgebildet, dass in dieser Drehrichtung, bei der die Spindel zunächst weiter in der der zweiten Axialrichtung 84 entsprechenden Drehrichtung verdreht wird, die Mutter 52 nach der Art eines Freilaufes über die Vorsprünge 112 hinwegfahren kann, und zwar aufgrund der Schrägkonturabschnitte 116. Um anschließend eine Richtungsumkehr der Mutter 52 in die erste Axialrichtung 68 zu erreichen, wird die Mutter 52 zunächst so verdreht, dass der Schaltnocken 56 einer Axialführung 66 zugeordnet ist. Anschließend wird die Spindel 46 in der entgegengesetzten Drehrichtung angetrieben. Hierdurch gelangt der Vorsprung 110, der vorzugsweise als Kugel ausgebildet ist, an den Sperrkonturabschnitt 118, so dass die Mutter 52 nicht in der entgegengesetzten Drehrichtung drehen kann und folglich in Umfangsrichtung festgehalten wird. Hierdurch wird die Mutter 52 zwangsweise in der ersten Axialrichtung 68 bewegt. Der Sperrkonturabschnitt 118 und die Vorspannung bzw. der Überstand der Vorsprünge 112 sind so gewählt, dass die Mutter 52 solange in Umfangsrichtung gehalten wird, bis der Schaltnocken 56 in die Axialführung 66 eingefädelt hat.

Um dies zu erleichtern, kann an dem axialen "Maul" der Axialführung 66 ein geeignetes Paar von Abschrägungen 122 vorgesehen sein, und in entsprechender Weise kann der Schaltnocken 56 auf der der Axialführung 66 zugewandten Seite mit geeigneten Abschrägungen 120 ausgebildet sein.

In Fig. 9 ist eine weitere Ausführungsform eines Antriebsstranges 10" dargestellt. Der Antriebsstrang 10" weist einen Antriebsmotor 12" auf, der beispielsweise als Elektromotor ausgebildet sein kann. Die Getriebeanordnung 16" weist vorliegend genau zwei Gangstufen auf, die mittels zweier Radsätze 22a, 22b eingerichtet werden können, die mittels einer ersten Schaltkupplung 28a und einer zweiten Schaltkupplung 28b ein- und ausgelegt werden können, und zwar alternativ. Die Schaltkupplungen 28a, 28b sind in ein Schaltkupplungspaket integriert, das mittels einer einzelnen Schaltmuffe betätigbar ist, die über eine Koppeleinrichtung 62 mit einer Schubstange 60 gekoppelt ist. Die Radsätze 22a, 22b können Festräder aufweisen, die mit einer weiteren Welle verbunden sind, oder direkt mit einem Eingangsglied eines Differenzials 18" verbunden sind, so dass das Getriebe vorliegend genau zwei Gangstufen aufweist.

Bei dieser Variante ist es möglich, dass so realisierte Schaltkupplungspakete 124 mittels nur einer Schubstange 60 zu betätigen, die mittels eines Spindeltriebs 44 betätigt wird, der eine Spindel 46 und eine Mutter 52 aufweist, wie bei den obigen Ausführungsformen.

Im vorliegenden Fall ist es jedoch möglich, die Mutter 52 über eine starre Kopplung 126 mit der Schubstange 60 zu koppeln, so dass über die starre Kopplung 126 sowohl Schub- als auch Zugkräfte auf die Schubstange 60 übertragen werden können.

Eine derartige Ausgestaltung einer Schaltanordnung 40" eignet sich alternativ auch zum Ein- und Auslegen einer Parksperrenanordnung.

Insgesamt lässt sich mit der vorliegenden Erfindung je nach Ausführungsform wenigstens einer der folgenden Vorteile erzielen.

Eine Wähl- und eine Schaltfunktion können durch Erlauben/Erzwingen bzw. Verhindern eines Mitdrehens der Mutter mit der Spindel mittels nur eines einzelnen Antriebes realisiert werden. Die Schaltanordnung ist um Zusatzfunktionen wahlweise erweiterbar, wie z.B. eine Park-by-Wire-Parksperrenanordnung. Die Schaltanordnung kann sehr einfach und robust realisiert werden. Die Schaltanordnung lässt sich sehr gut in eine Getriebepackage integrieren. Ferner lässt sich die Schaltanordnung leicht für mehrere Gangstufen, also mehr als sechs Gangstufen oder mehr als sieben Gangstufen erweitern. Ferner lässt sich die Schaltanordnung ggf. einfach um Zusatzfunktionen (Park-By-Wire) erweitern.

Insgesamt ergibt sich eine einfache Herstellbarkeit, bei einer relativ großen Anzahl von Gleichteilen. Die Gesamtstruktur des Getriebes kann gegenüber einer Ausführungsform, bei der die Gangstufen mittels einer Schaltwalze oder auf sonstige Art und Weise betätigt werden, unbeeinflusst bleiben.

Aufgrund der kompakten Bauweise ist es denkbar, die Schaltanordnung nahe an zu geordneten Schaltkupplungen anzuordnen und die Schaltgabeln bzw. Anlenkungen der Schaltgabeln sehr kurz auszuführen.

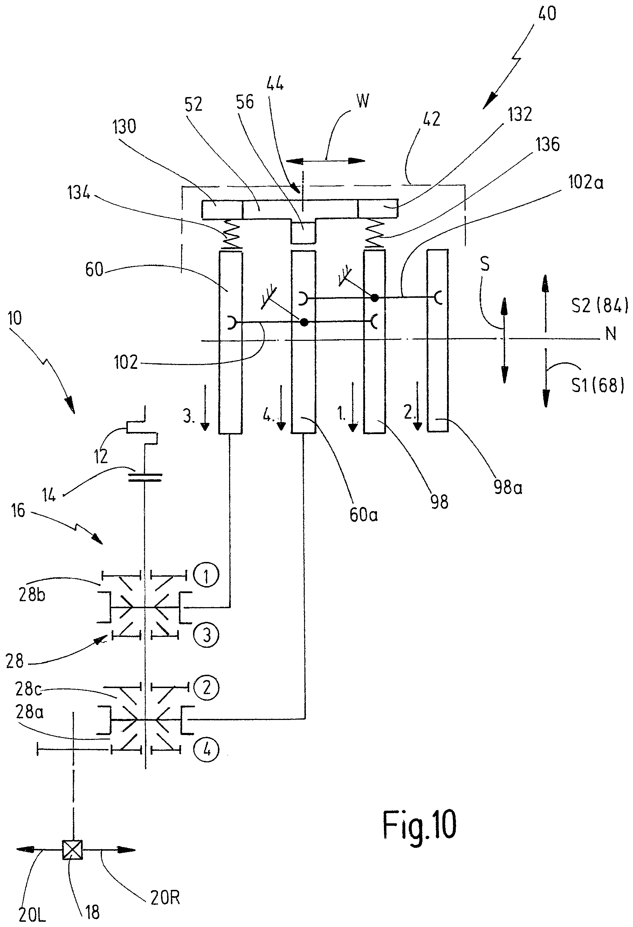

In den Figuren 10 bis 13 ist eine erste Ausführungsform einer erfindungsgemäßen Schaltanordnung gezeigt, die hinsichtlich Aufbau und Funktionsweise der Schaltanordnung der Figuren 3 bis 8 entspricht. Gleiche Elemente sind daher durch gleiche Bezugszeichen gekennzeichnet. Im Folgenden werden im Wesentlichen die Unterschiede erläutert.

Die Schaltanordnung 40 der Fig. 10 dient zum Betätigen von Gangstufen 1 bis 4 eines automatisierten Schaltgetriebes, wobei eine erste Schubstange 60 mit einem ersten Schaltkupplungspaket mit Schaltkupplungen 28, 28b für die Gangstufen 1, 3 verbunden ist und wobei eine zweite Schubstange 60a mit einem Schaltkupplungspaket verbunden ist, das Schaltkupplungen 28a, 28c für die Gangstufen 4, 2 aufweist.

Die Schubstange 60 ist mit einer Rückholstange 98 gekoppelt, und zwar mittels einer Koppeleinrichtung, die bspw. einen Hebel 102 aufweist. In entsprechender Weise ist die zweite Schubstange 60a mit einer Rückholstange 98a über eine weitere Koppeleinrichtung gekoppelt, die bspw. einen Hebel 102a aufweist.

Ein Schaltglied 52 ist in einer Richtung quer zu der Schaltrichtung S bewegbar, wie es in Fig. 10 bei W gezeigt ist. Die Querbewegung kann insbesondere eine Drehbewegung sein, in welchem Fall das Schaltglied 52 vorzugsweise als Mutter eines Spindeltriebs ausgebildet ist, wie er oben beschrieben ist.

Das Schaltglied 52 weist neben dem Schaltnocken 56 einen ersten Mitnehmer 130 und einen zweiten Mitnehmer 132 auf. Die Mitnehmer 130, 132 sind in Querrichtung W gesehen vorzugsweise auf gegenüberliegenden Seiten des Schaltnockens 56 angeordnet. Der erste Mitnehmer 130 ist mit einer ersten Federeinrichtung 134 gekoppelt. Der zweite Mitnehmer 132 ist mit einer zweiten Federeinrichtung 136 gekoppelt.

Die Mitnehmer 130, 132 bzw. deren Federeinrichtungen 134, 136 sind in Querrichtung W gesehen so angeordnet, dass bei einer Anwahl einer Schubstange (in Fig. 10 die Schubstange 60a) die Mitnehmer bzw. deren Federeinrichtungen in Querrichtung W gesehen mit benachbarten Stangen (hier Schubstange 60 und Rückholstange 98) ausgerichtet sind.

Die Mitnehmer dienen dazu, vor oder bei einem Schaltvorgang an einer ausgewählten Stange (hier bspw. Schubstange 60a), eine Schubkraft auf nicht ausgewählte Stangen (hier 60, 98) zu übertragen, um diese in die Neutralposition N zu versetzen.

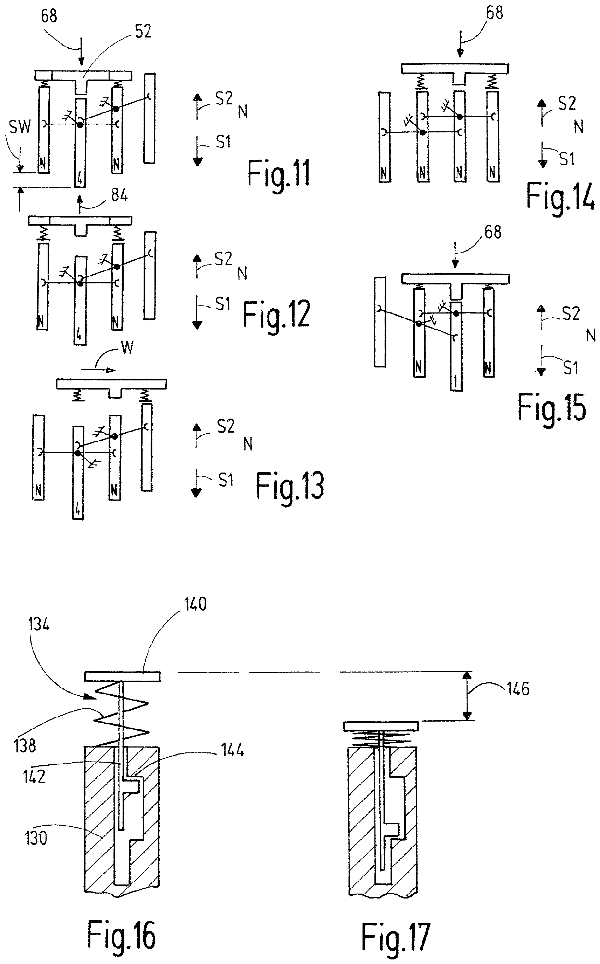

Dies wird beispielhaft anhand der Figuren 11 bis 15 gezeigt, die ausgehend von der Darstellung der Fig. 10 zunächst das Einlegen einer Vorwärtsgangstufe 4 und anschließend das Einlegen einer Vorwärtsgangstufe 1 zeigen.

In Fig. 11 wird ausgehend von der Darstellung der Fig. 10 das Schaltglied 52 in der ersten Axialrichtung 68 bewegt, um die Schubstange 60a in die erste Schaltposition S1 zu versetzen, bei der die Gangstufe 4 eingelegt ist.

Zum Einlegen der Gangstufe 1 wird gemäß Fig. 12 zunächst das Schaltglied 52 in der zweiten Schaltrichtung 84 zurückbewegt, und zwar so weit, dass die Federeinrichtungen hinter die gegenläufig bewegte Rückholstange 98a bewegt werden können, und zwar in Querrichtung W, wie es in Fig. 13 gezeigt ist.

In Fig. 13 ist der Schaltnocken mit der Rückholstange 98 zum Einlegen der Vorwärtsgangstufe 1 in Querrichtung W ausgerichtet. Ferner sind die Federeinrichtungen 134, 136 mit der Schubstange 60a der Quell-Gangstufe 4 und der zugeordneten Rückholstange 98a ausgerichtet.

Anschließend wird das Schaltglied 52 wieder in der ersten Schaltrichtung bewegt, wie es in Fig. 14 bei 68 gezeigt ist. Durch die Wirkung der Feder, von denen die Federeinrichtung 136 auf die Rückholstange 98a wirkt, werden die Rückholstange 98a und aufgrund der Kopplung auch die Schubstange 60a in die Neutralposition bewegt, wie es in Fig. 14 dargestellt ist. Durch Fortsetzen der Bewegung des Schaltgliedes in der ersten Axialrichtung 68 kann anschließend die Vorwärtsgangstufe 1 eingelegt werden, wie es in Fig. 15 gezeigt ist, wobei die Federeinrichtungen komprimiert werden, wie es ebenfalls in Fig. 15 dargestellt ist.

Die Figuren 16 und 17 zeigen beispielhaft eine Federeinrichtung 134, die eine Druckfeder 138 aufweist, die zwischen einem Teller 140 und dem Mitnehmer 130 angeordnet ist. Der Teller 140 ist mit einem Stößel 142 verbunden, der in dem Mitnehmer 130 geführt ist, und zwar begrenzt durch einen Anschlag 144, der den Federweg 146 der Federeinrichtung 134 definiert. Gegebenenfalls kann ein zweiter Anschlag vorgesehen sein, wie es in Fig. 16 und 17 dargestellt ist, der vermeidet, dass die Druckfeder 138 vollständig komprimiert werden kann.

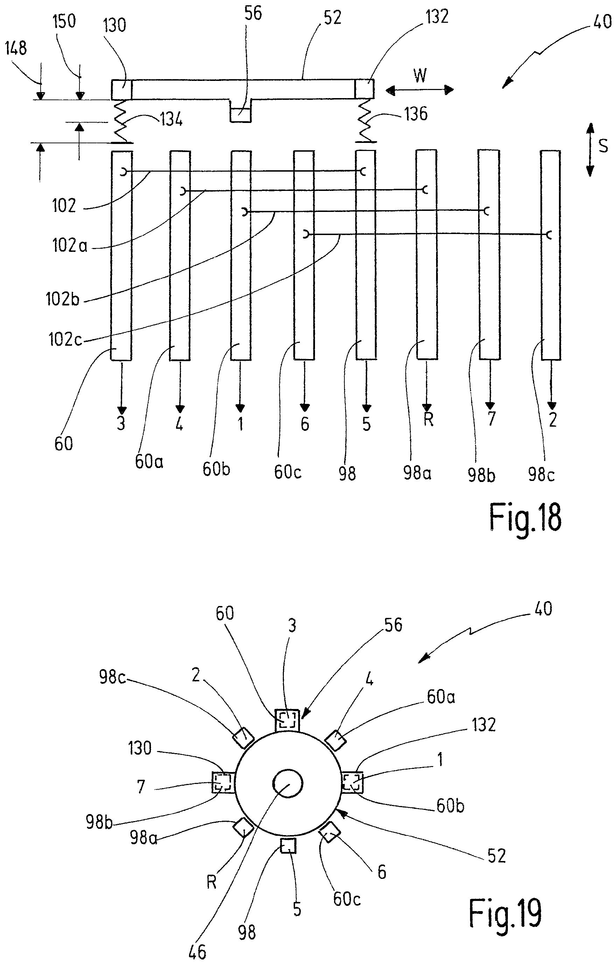

In den Figuren 18 und 19 ist eine weitere Ausführungsform der erfindungsgemäßen Schaltanordnung 40 gezeigt, die hinsichtlich Aufbau und Funktionsweise generell der Schaltanordnung 40 der Figuren 10 bis 15 entspricht. Gleiche Elemente sind daher durch gleiche Bezugszeichen gekennzeichnet.

Die Schaltanordnung 40 der Fig. 18 und 19 dient zur Betätigung eines Doppelkupplungsgetriebes mit zwei Teilgetrieben, von denen das erste Teilgetriebe den Gangstufen 1, 3, 5, 7 zugeordnet ist, und von denen das zweite Teilgetriebe den Gangstufen 2, 4, 6, R zugeordnet ist.

Fig. 18 zeigt wiederum eine schematische Abwicklung dieser Schaltanordnung 40, und Fig. 19 zeigt eine schematische Axialansicht. Es ist zu erkennen, dass die Schaltanordnung 40 eine Schubstange 60 zum Einlegen der Vorwärtsgangstufe 3, eine Schubstange 60a zum Einlegen der Vorwärtsgangstufe 4, eine Schubstange 60b zum Einlegen der Vorwärtsgangstufe 1, eine Schubstange 60c zum Einlegen der Vorwärtsgangstufe 6, eine Rückholstange 98 zum Einlegen der Vorwärtsgangstufe 5, eine Rückholstange 98a zum Einlegen der Rückwärtsgangstufe R, eine Rückholstange 98b zum Einlegen der Vorwärtsgangstufe 7 sowie eine Rückholstange 98c zum Einlegen der Vorwärtsgangstufe 2 aufweist. Durch jeweilige Koppeleinrichtungen mit jeweiligen Hebeln 102, 102a, 102b, 102c sind jeweils folgende Stangen gekoppelt: 60 mit 98, 60a mit 98a, 60b mit 98b und 60c mit 98c.

Die Stangen 60, 98 sind in Umfangsrichtung so angeordnet, dass eine Schubstange oder Rückholstange eines Teilgetriebes jeweils benachbart ist zu einer Schubstange oder Rückholstange des anderen Teilgetriebes.

Wie es in Fig. 19 gezeigt ist, ist die Schubstange 60 in Umfangsrichtung ebenfalls benachbart zu der Rückholstange 98c.

Das Schaltglied 52 weist einen Schaltnocken 56 sowie zwei Mitnehmer 130, 132 auf, die von dem Schaltnocken 56 in Querrichtung W so beabstandet sind, dass sie jeweils in Umfangsrichtung bzw. in Querrichtung W gesehen jeweils, bezogen auf den Schaltnocken 56, mit einer übernächsten Stange ausgerichtet sind. In der Darstellung der Fig. 18 ist der Schaltnocken 56 mit der Schubstange 60b für die Vorwärtsgangstufe 1 ausgerichtet, und der Mitnehmer 130 bzw. dessen Federeinrichtung 134 ist mit der Schubstange 60 für die Vorwärtsgangstufe 3 ausgerichtet, und der Mitnehmer 132 bzw. dessen Federeinrichtung 134 ist mit der Rückholstange 98 zum Einlegen der Vorwärtsgangstufe 5 ausgerichtet.

Folglich sind bei dieser Anordnung der Schaltnocken 56 und die Mitnehmer 130, 132 jeweils ausschließlich mit solchen Stangen ausgerichtet, die jeweils einem Teilgetriebe zugeordnet sind.

Folglich kann bei dem Doppelkupplungsgetriebe gewährleistet werden, dass innerhalb des jeweils fraglichen Teilgetriebes beim Einlegen einer Ziel-Gangstufe etwaige Quell-Gangstufen in dem gleichen Teilgetriebe mittels der Mitnehmer 130, 132 und der zugeordneten Federeinrichtungen 134, 136 ausgelegt werden.

Fig. 18 zeigt ferner bei 148 einen Überstand, um den die Federeinrichtungen 134, 136 in Schaltrichtung S gegenüber dem Schaltnocken 56 vorstehen. Bei 150 ist der Weg gezeigt, der einem Schaltweg von der Neutralposition in eine Schaltposition S1 entspricht, und der vorzugsweise kleiner gleich dem Federweg 146 ist.

## Patentansprüche

1. Schaltanordnung (40) für ein Kraftfahrzeuggetriebe (16), das wenigstens zwei Gangstufen (1-4; 1-7, R) aufweist, die mittels unterschiedlicher Stangen (60, 98) nämlich Schub- und Rückholstangen, einlegbar und auslegbar sind, mit
- einem Gehäuse (42),
- wenigstens zwei Schubstangen (60, 60a, 60b), die an dem Gehäuse (42) in Axialrichtung (S) zwischen einer Neutralposition (N) und wenigstens einer Schaltposition beweglich gelagert sind und jeweils mit einer Schaltkupplung (28) oder einem Schaltkupplungspaket koppelbar sind,
- wenigstens zwei Rückholstangen (98, 98a, 98b), die an dem Gehäuse (42) in Axialrichtung (S) zwischen einer Neutralposition (N) und wenigstens einer Schaltposition beweglich gelagert sind,
- die Schubstangen (60, 60a, 60b) sind mit ihren jeweils zugeordneten Rückholstangen (98, 98a, 98b) über eine jeweilige Rückholkoppeleinrichtung (100) gekoppelt, und - die Rückholkoppeleinrichtungen (100) sind so ausgebildet, dass die jeweilige Schubstange (60) und ihren jeweils zugeordneten Rückholstange (98) jeweils in axialer Richtung gegenläufig versetzt werden, derart, dass die Rückholstange (98) in der zweiten Axialrichtung (84) versetzt wird, wenn die Schubstange (60) in der ersten Axialrichtung (68) versetzt wird, und umgekehrt,
- einem Schaltglied (52), das an dem Gehäuse (42) so gelagert ist, dass ein Schaltnocken (56) des Schaltgliedes (52) zum Wählen mit einer der Schubstangen (60) oder mit einer der Rückholstangen (98) ausrichtbar ist und für einen Schaltvorgang auf die ausgewählte Stange (60, 98) eine Schubkraft übertragen und diese in der ersten Axialrichtung (S1) bewegen kann,
wobei
an dem Schaltglied (52) ferner wenigstens ein Mitnehmer (130, 132) so angeordnet ist, dass der wenigstens eine Mitnehmer (130, 132), vor oder bei einem Schaltvorgang an einer ausgewählten Schub- oder Rückholstange, eine Schubkraft auf wenigstens eine nicht ausgewählte Schubstange (60, 60a, 60b) oder Rückholstange (98, 98a, 98b) übertragen kann, um diese in die Neutralposition (N) zu versetzen, **dadurch gekennzeichnet, dass**
der oder die Mitnehmer (130, 132) jeweils mit einer Federeinrichtung (134, 136) verbunden sind, wobei die Federeinrichtung (134, 136) so angeordnet und ausgebildet ist, dass die Schubkraft von dem Mitnehmer (130, 132) über die Federeinrichtung (136, 138) auf die wenigstens eine nicht ausgewählte Stange und deren zugeordnete Stange übertragen wird.

2. Schaltanordnung nach Anspruch 1, **dadurch gekennzeichnet, dass** an dem Schaltglied (52) zwei Mitnehmer (130, 132) so angeordnet sind, dass die Mitnehmer (130, 132), vor oder bei einem Schaltvorgang an einer ausgewählten Schub- oder Rückholstange, eine Schubkraft auf eine nicht ausgewählte Schubstange (60) und deren zugeordnete Rückholstange (98, 98a, 98b) übertragen können, um diese in die Neutralposition (N) zu versetzen.

3. Schaltanordnung nach Anspruch 1, **dadurch gekennzeichnet, dass** der Federweg (146) der Federeinrichtung (134, 136) größer gleich dem Weg (SW) der Schub- oder Rückholstange von der Neutralposition (N) in die Schaltposition (S1) ist.

4. Schaltanordnung nach Anspruch 1 oder 3, **dadurch gekennzeichnet, dass** die Federeinrichtung (134, 136) und der Schaltnocken (56), in axialer Richtung gesehen, so zueinander angeordnet sind, dass die Übertragung einer Schubkraft von dem Mitnehmer oder den Mitnehmern (130, 132) über die Federeinrichtung (134, 136) auf die nicht ausgewählte Stange oder Stangen erfolgt, bevor der Schaltnocken eine Schubkraft auf die ausgewählte Schub- oder Rückholstange ausübt, so dass gewährleistet wird, dass eine Schaltkupplung einer Quell-Gangstufe (4) geöffnet wird, bevor eine Schaltkupplung einer Ziel-Gangstufe (1) geschlossen wird, die der ausgewählten Stange zugeordnet ist.

5. Schaltanordnung nach einem der Ansprüche 1 - 4, **dadurch gekennzeichnet, dass** zwischen einer Schubstange (60, 60a, 60b) und ihrer zugeordneten Rückholstange (98, 98a, 98b), in einer Richtung quer zur Axialrichtung gesehen, wenigstens eine andere Schubstange (60, 60a, 60b) oder Rückholstange (98, 98a, 98b) angeordnet ist.

6. Schaltanordnung nach einem der Ansprüche 1 - 5, **dadurch gekennzeichnet, dass** das Schaltglied (52) zum Wählen um eine Längsachse (48) verdrehbar ist, wobei die Schubstangen (60, 60a, 60b) und die Rückholstangen (98, 98a, 98b) in Umfangsrichtung um die Längsachse (48) herum verteilt angeordnet sind.

7. Schaltanordnung nach Anspruch 6, **dadurch gekennzeichnet, dass** eine Schubstange (60, 60a, 60b) und ihre zugeordnete Rückholstange (98, 98a, 98b) diametral in Bezug auf die Längsachse (48) angeordnet sind.

8. Schaltanordnung nach einem der Ansprüche 1 - 7, **dadurch gekennzeichnet, dass** das Stellglied (52) als Mutter ausgebildet ist, die mit einer Spindel (46) einen Spindeltrieb (44) bildet.

9. Kraftfahrzeuggetriebe (16) mit einer Schaltanordnung nach einem der Ansprüche 1 - 8, **dadurch gekennzeichnet, dass** das Kraftfahrzeuggetriebe (16) ein automatisiertes Schaltgetriebe ist.

10. Kraftfahrzeuggetriebe nach Anspruch 9, **dadurch gekennzeichnet, dass** das Schaltglied (52) für alle nicht ausgewählten Schubstangen (60, 60a, 60b) und deren zugeordnete Rückholstangen (98, 98a, 98b) einen Mitnehmer (130, 132) aufweist, so dass bei einer eingelegten Gangstufe alle anderen Gangstufen des Kraftfahrzeuggetriebes über die Mitnehmer (130, 132) verriegelt sind.

11. Kraftfahrzeuggetriebe nach Anspruch 10, **dadurch gekennzeichnet, dass** das Kraftfahrzeuggetriebe (16) ein Doppelkupplungsgetriebe ist, das ein erstes Teilgetriebe (1, 3, 5, 7) und eine zweites Teilgetriebe (2, 4, 6, R) aufweist, wobei die Schaltanordnung (40) Schubstangen (60, 60a, 60b) und Rückholstangen (98, 98a, 98b) für beide Teilgetriebe aufweist, die mittels des einen Schaltgliedes (52) betätigbar sind.

12. Kraftfahrzeuggetriebe nach Anspruch 11, **dadurch gekennzeichnet, dass** das Schaltglied (52) zum Wählen um eine Längsachse (48) verdrehbar ist, wobei die Schubstangen (60, 60a, 60b) und die Rückholstangen (98, 98a, 98b) in Umfangsrichtung um die Längsachse herum verteilt angeordnet sind, wobei, über den Umfang gesehen, eine Schubstange (60, 60a, 60b) oder Rückholstange (98, 98a, 98b) eines Teilgetriebes benachbart ist zu einer Schubstange (60, 60a, 60b) oder Rückholstange (98, 98a, 98b) des anderen Teilgetriebes.

13. Verfahren zum Betätigen einer Schaltanordnung (40) eines Kraftfahrzeuggetriebes (16), das wenigstens zwei Gangstufen (1-4; 1-7, R) aufweist, einer Schaltanordnung (40) nach einem der Ansprüche 1-8, wobei der Schaltnocken (56) zunächst mit einer Schubstange (60, 60a, 60b) oder Rückholstange (98, 98a, 98b) ausgerichtet wird und die besagte Schubstange (60, 60a 60b) oder Rückholstange (98, 98a, 98b) anschließend axial verschiebt, um eine Ziel-Gangstufe (A) einzulegen, wobei der Mitnehmer (130, 132) dafür sorgt, dass bei der axialen Bewegung des Schaltgliedes (52) eine andere der besagten Schubstange (60, 60a 60b) oder Rückholstange (98, 98a, 98b) in eine Neutralposition (N) versetzt wird oder in dieser verbleibt, wobei an dem Schaltglied (52) ferner wenigstens ein Mitnehmer (130, 132) so angeordnet wird, dass der wenigstens eine Mitnehmer (130, 132), vor oder bei einem Schaltvorgang an einer ausgewählten Schub- oder Rückholstange, eine Schubkraft über besagte Federeinrichtung (134, 136) auf wenigstens eine nicht ausgewählte Schubstange (60, 60a, 60b) oder Rückholstange (98, 98a, 98b) überträgt, um diese in die Neutralposition (N) zu versetzen.

## Claims

1. Shifting assembly (40) for a motor vehicle transmission (16) which has at least two gear stages (1-4; 1-7, R) which can be engaged and disengaged by means of different rods (60, 98), with
- a housing (42),
- at least two push rods (60, 60a, 60b) which are mounted on the housing (42) such that they can be moved in the axial direction (S) between a neutral position (N) and at least one shifting position, and can be coupled in each case to a shifting clutch (28) or a shifting clutch pack,
- at least two return rods (98, 98a, 98b) which are mounted on the housing (42) such that they can be moved in the axial direction (S) between a neutral position (N) and at least one shifting position,
- the push rods (60, 60a, 60b) are coupled to their respective associated return rods (98, 98a, 98b) via a respective return coupling device (100), and
- the return coupling devices (100) are configured in such a way that the respective push rod (60) and its respective associated return rod (98) are moved in an opposed manner in each case in the axial direction, in such a way that the return rod (98) is moved in the second axial direction (84) when the push rod (60) is moved in the first axial direction (68), and vice versa,
- a shifting member (52) which is mounted on the housing (42) in such a way that a shifting cam (56) of the shifting member (52) can be aligned for selecting purposes with one of the push rods (60) or with one of the return rods (98), and can transmit a thrust force to the selected rod (60, 98) for a shifting operation and can move it in the first axial direction (S1), at least one driver (130, 132) being arranged on the shifting member (52), furthermore, in such a way that, before or during a shifting operation at a selected push rod or return rod, the at least one driver (130, 132) can transmit a thrust force to at least one non-selected push rod (60, 60a, 60b) or return rod (98, 98a, 98b), in order to move the latter into the neutral position (N), **characterized in that** the driver or drivers (130, 132) is/are connected in each case to a spring device (134, 136), the spring device (134, 136) being arranged and configured in such a way that the thrust force is transmitted from the driver (130, 132) via the spring device (136, 138) to the at least one non-selected rod and its associated rod.

2. Shifting assembly according to Claim 1, **characterized in that** two drivers (130, 132) are arranged on the shifting member (52) in such a way that, before or during a shifting operation at a selected push rod or return rod, the drivers (130, 132) can transmit a thrust force to a non-selected push rod (60) and its associated return rod (98, 98a, 98b), in order to move the latter into the neutral position (N).

3. Shifting assembly according to Claim 1, **characterized in that** the spring travel (146) of the spring device (134, 136) is greater than or equal to the travel (SW) of the push rod or return rod from the neutral position (N) into the shifting position (S1).

4. Shifting assembly according to Claim 1 or 3, **characterized in that** the spring device (134, 136) and the shifting cam (56) are arranged with respect to one another, as viewed in the axial direction, in such a way that the transmission of a thrust force takes place from the driver or the drivers (130, 132) via the spring device (134, 136) to the non-selected rod or rods, before the shifting cam exerts a thrust force on the selected push rod or return rod, with the result that it is ensured that a shifting clutch of a source gear stage (4) is opened before a shifting clutch of a target gear stage (1) is closed which is assigned to the selected rod.

5. Shifting assembly according to one of Claims 1 to 4, **characterized in that** at least one other push rod (60, 60a, 60b) or return rod (98, 98a, 98b) is arranged between a push rod (60, 60a, 60b) and its associated return rod (98, 98a, 98b), as viewed in a direction transversely with respect to the axial direction.

6. Shifting assembly according to one of Claims 1 to 5, **characterized in that** the shifting member (52) can be rotated about a longitudinal axis (48) for selection purposes, the push rods (60, 60a, 60b) and the return rods (98, 98a, 98b) being arranged distributed in the circumferential direction around the longitudinal axis (48).

7. Shifting assembly according to Claim 6, **characterized in that** a push rod (60, 60a, 60b) and its associated return rod (98, 98a, 98b) are arranged in a diametrically opposed manner in relation to the longitudinal axis (48).

8. Shifting assembly according to one of Claims 1 to 7, **characterized in that** the actuator (52) is configured as a nut which forms a spindle drive (44) with a spindle (46).

9. Motor vehicle transmission (16) with a shifting assembly according to one of Claims 1 to 8, **characterized in that** the motor vehicle transmission (16) is an automated manual transmission.

10. Motor vehicle transmission according to Claim 9, **characterized in that** the shifting member (52) for all non-selected push rods (60, 60a, 60b) and their associated return rods (98, 98a, 98b) has a driver (130, 132), with the result that, in the case of an engaged gear stage, all other gear stages of the motor vehicle transmission are locked via the drivers (130, 132).

11. Motor vehicle transmission according to Claim 10, **characterized in that** the motor vehicle transmission (16) is a double clutch transmission which has a first sub-transmission (1, 3, 5, 7) and a second sub-transmission (2, 4, 6, R), the shifting assembly (40) having push rods (60, 60a, 60b) and return rods (98, 98a, 98b) for the two sub-transmissions, which can be actuated by means of the one shifting member (52).

12. Motor vehicle transmission according to Claim 11, **characterized in that** the shifting member (52) can be rotated about a longitudinal axis (48) for selection purposes, the push rods (60, 60a, 60b) and the return rods (98, 98a, 98b) being arranged distributed in the circumferential direction around the longitudinal axis, a push rod (60, 60a, 60b) or return rod (98, 98a, 98b) of one sub-transmission being adjacent, as viewed over the circumference, with respect to a push rod (60, 60a, 60b) or return rod (98, 98a, 98b) of the other sub-transmission.

13. Method for actuating a shifting assembly (40) of a motor vehicle transmission (16) which has at least two gear stages (1-4; 1-7, R), a shifting assembly (40) according to one of Claims 1 to 8, the shifting cam (56) first of all being aligned with a push rod (60, 60a, 60b) or return rod (98, 98a, 98b) and subsequently axially displacing the said push rod (60, 60a, 60b) or return rod (98, 98a, 98b), in order to engage a target gear stage (A), the driver (130, 132) ensuring that, in the case of the axial movement of the shifting member (52), another one of the said push rod (60, 60a, 60b) or return rod (98, 98a, 98b) is moved into a neutral position (N) or remains in the latter, at least one driver (130, 132) being arranged, furthermore, on the shifting member (52) in such a way that, before or during a shifting operation at a selected push rod or return rod, the at least one driver (130, 132) transmits a thrust force via the said spring device (134, 136) to at least one non-selected push rod (60, 60a, 60b) or return rod (98, 98a, 98b), in order to move the latter into the neutral position (N).

## Revendications

1. Dispositif de changement de vitesse (40) destiné à une transmission de véhicule automobile (16) qui comporte au moins deux rapports de vitesse (1-4 ; 1-7, R) qui peuvent être engagés et désengagés au moyen de différentes tiges (60, 98) à savoir des tiges de poussée et de rappel, ledit dispositif comprenant
- un boîtier (42),
- au moins deux tiges de poussée (60, 60a, 60b) qui sont montées sur le boîtier (42) de manière mobile dans la direction axiale (S) entre une position neutre (N) et au moins une position de commutation et qui peuvent chacune être accouplées à un embrayage (28) ou un groupe d'embrayages,
- au moins deux tiges de rappel (98, 98a, 98b) qui sont montées sur le boîtier (42) de manière mobile dans la direction axiale (S) entre une position neutre (N) et au moins une position de commutation,
- les tiges de poussée (60, 60a, 60b) étant accouplées à leurs tiges de rappel (98, 98a, 98b) respectivement associées par le biais d'un mécanisme d'accouplement de rappel respectif (100), et
- les mécanismes d'accouplement de rappel (100) étant conçus de telle sorte que la tige de poussée respective (60) et sa tige de rappel associée (98) soient chacune décalées dans des sens opposés dans la direction axiale de sorte que la tige de rappel (98) soit décalée dans la deuxième direction axiale (84) lorsque la tige de poussée (60) est déplacée dans la première direction axiale (68), et inversement,
- un élément de commutation (52), qui est monté sur le boîtier (42) de sorte qu'une came de commutation (56) de l'élément de commutation (52) puisse être alignée avec l'une des tiges de poussée (60) ou avec l'une des tiges de rappel (98) pour effectuer la sélection et puisse transmettre une force de poussée à la tige (60, 98) sélectionnée pour effectuer une opération de commutation et puisse la déplacer dans la première direction axiale (S1), au moins un entraîneur (130, 132) étant en outre disposé au niveau de l'élément de commutation (52) de sorte que, avant ou pendant un processus de commutation au niveau d'une tige de poussée ou de rappel sélectionnée, l'au moins un entraîneur (130, 132) puisse transmettre une force de poussée à au moins une tige de poussée (60, 60a, 60b) ou tige de rappel (98, 98a, 98b) non sélectionnée afin de la déplacer dans la position neutre (N), **caractérisé en ce que**
le ou les entraîneurs (130, 132) sont chacun reliés à un mécanisme à ressort (134, 136), le mécanisme à ressort (134, 136) étant disposé et conçu de telle manière que la force de poussée de l'entraîneur (130, 132) soit transmise, par le biais du mécanisme à ressort (136, 138), à l'au moins une tige non sélectionnée et à la tige qui lui est associée.

2. Dispositif de commutation selon la revendication 1, **caractérisé en ce que** deux entraîneurs (130, 132) sont disposés au niveau de l'élément de commutation (52) de sorte que, avant ou pendant un processus de commutation au niveau d'une tige de poussée ou de rappel sélectionnée, les entraîneurs (130, 132) puissent transmettre une force de poussée à une tige de poussée (60) non sélectionnée et à la tige de rappel (98, 98a, 98b) qui lui est associée pour les déplacer dans la position neutre (N).

3. Dispositif de commutation selon la revendication 1, **caractérisé en ce que** la course de ressort (146) du mécanisme à ressort (134, 136) est supérieure ou égale à la course (SW) de la tige de poussée ou de rappel de la position neutre (N) jusque dans la position de commutation (S1).

4. Dispositif de commutation selon la revendication 1 ou 3, **caractérisé en ce que** le mécanisme à ressort (134, 136) et la came de commutation (56), vus dans la direction axiale, sont disposés l'un par rapport à l'autre de sorte que la transmission d'une force de poussée de l'entraîneur ou des entraîneurs (130, 132) à la tige sélectionnée ou aux tiges non sélectionnées soit effectuée par le biais du mécanisme à ressort (134, 136) avant que la came de commutation n'exerce une force de poussée sur la tige de poussée ou de rappel sélectionnée de façon à garantir qu'un embrayage d'un rapport de vitesse source (4) soit ouvert avant qu'un embrayage d'un rapport de vitesse cible (1), qui est associé à la tige sélectionnée, ne soit fermé.

5. Dispositif de commutation selon l'une des revendications 1 à 4, **caractérisé en ce qu'**au moins une autre tige de poussée (60, 60a, 60b) ou tige de rappel (98, 98a, 98b) est disposée entre une tige de poussée (60, 60a, 60b) et la tige de rappel (98, 98a, 98b) qui lui est associée, vues dans une direction transversale à la direction axiale.

6. Dispositif de commutation selon l'une des revendications 1 à 5, **caractérisé en ce que** l'élément de commutation (52) peut être tourné sur un axe longitudinal (48) pour effectuer la sélection, les tiges de poussée (60, 60a, 60b) et les tiges de rappel (98, 98a, 98b) étant disposées de manière répartie dans la direction circonférentielle autour de l'axe longitudinal (48).

7. Dispositif de commutation selon la revendication 6, **caractérisé en ce qu'**une tige de poussée (60, 60a, 60b) et la tige de rappel (98, 98a, 98b) qui lui est associée sont disposées diamétralement par rapport à l'axe longitudinal (48).

8. Dispositif de commutation selon l'une des revendications 1 à 7, **caractérisé en ce que** l'actionneur (52) est conçu comme un écrou qui forme avec une broche (46) un entraînement à broche (44).

9. Transmission de véhicule automobile (16) comprenant un dispositif de commutation selon l'une des revendications 1 à 8, **caractérisée en ce que** la transmission de véhicule automobile (16) est une transmission automatisée.

10. Transmission de véhicule automobile selon la revendication 9, **caractérisée en ce que** l'élément de commutation (52) pour toutes les tiges de poussée (60, 60a, 60b) non sélectionnées et les tiges de rappel (98, 98a, 98b) qui leur sont associées comporte un entraîneur (130, 132) de sorte que, lorsqu'un rapport de vitesse est engagé, tous les autres rapports de vitesse de la transmission du véhicule automobile sont verrouillés par le biais des entraîneurs (130, 132).

11. Transmission de véhicule automobile selon la revendication 10, **caractérisée en ce que** la transmission de véhicule automobile (16) est une transmission à double embrayage qui comporte une première partie de transmission (1, 3, 5, 7) et une deuxième partie de transmission (2, 4, 6, R), le dispositif de commutation (40) comprenant des tiges de poussée (60, 60a, 60b) et des tiges de rappel (98, 98a, 98b), destinées aux deux parties de transmission, qui peuvent être actionnées au moyen d'un élément de commutation (52).

12. Transmission de véhicule automobile selon la revendication 11, **caractérisée en ce que** l'élément de commutation (52) de sélection peut être tourné sur un axe longitudinal (48), les tiges de poussée (60, 60a, 60b) et les tiges de rappel (98, 98a, 98b) étant disposées de manière répartie dans la direction circonférentielle autour de l'axe longitudinal, une tige de poussée (60, 60a, 60b) ou une tige de rappel (98, 98a, 98b) d'une partie de transmission étant adjacente, vue dans la direction circonférentielle, à une tige de poussée (60, 60a, 60b) ou une tige de rappel (98, 98a, 98b) de l'autre partie de transmission.

13. Procédé d'actionnement d'un dispositif de changement de vitesse (40) d'une transmission de véhicule automobile (16) qui comporte au moins deux rapports de vitesse (1-4 ; 1-7, R), d'un dispositif de changement de vitesse (40) selon l'une des revendications 1 à 8,
la came de commutation (56) étant d'abord alignée avec une tige de poussée (60, 60a, 60b) ou tige de rappel (98, 98a, 98b) et ladite tige de poussée (60, 60a, 60b) ou tige de rappel (98, 98a, 98b) coulissant ensuite axialement pour engager un rapport de vitesse cible (A), l'entraîneur (130, 132) assurant que, pendant le déplacement axial de l'élément de commutation (52), une autre desdites tiges de poussée (60, 60a, 60b) ou tige de rappel (98, 98a, 98b) soit déplacée dans une position neutre (N) ou y reste, au moins un entraîneur (130, 132) étant en outre disposé au niveau de l'élément de commutation (52) de sorte que, avant ou pendant un processus de commutation au niveau d'une tige de poussée ou de rappel sélectionnée, l'au moins un entraîneur (130, 132) transmet une force de poussée à au moins une tige de poussée (60, 60a, 60b) ou tige de rappel (98, 98a, 98b) non sélectionnée par le biais dudit mécanisme à ressort (134, 136) pour la déplacer dans la position neutre (N).
